(19) Europäisches Patentamt
European Patent Office
Office européen des brevets

(11) **EP 4 075 345 A1**

(12) **EUROPEAN PATENT APPLICATION**

(43) Date of publication:
**19.10.2022 Bulletin 2022/42**

(21) Application number: **21217421.3**

(22) Date of filing: **23.12.2021**

(51) International Patent Classification (IPC):
**G06N 5/00** *(2006.01)*      **G06N 7/00** *(2006.01)*

(52) Cooperative Patent Classification (CPC):
**G06N 5/003; G06N 7/005**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.04.2021 JP 2021069480**

(71) Applicant: **FUJITSU LIMITED**
**Kawasaki-shi, Kanagawa 211-8588 (JP)**

(72) Inventor: **Koyama, Jumpei**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **INFORMATION PROCESSING SYSTEM, INFORMATION PROCESSING METHOD, AND INFORMATION PROCESSING PROGRAM**

(57)    An information processing system includes a node and another node. The node searches for the solution to a problem that is represented by an energy function including a plurality of state variables by changing a value of each of state variables belong to state variable group assigned corresponding to a subproblem generated by dividing the problem. The nodes holds a first weighting coefficient for a pair of state variables assigned to the node, and a second weighting coefficient for a pair of a state variable assigned to the node and a state variable assigned to the another node or a penalty value, calculates, for a value of each of the state variables, a change amount of a value of the energy function, based on a first weighting coefficient and a second weighting coefficient or a penalty value, and determines the state variable based on the calculated change amount.

FIG. 1

EP 4 075 345 A1

**Description**

[Technical Field]

The embodiments discussed herein are related to an information processing system, an information processing method, and an information processing program.

[Background Art]

There is an information processing apparatus that performs calculation by replacing a multivariable combinatorial optimization problem that is difficult to handle with a Neumann computer with an Ising model, which is a model representing a behavior of a spin of a magnetic substance. As a method for solving the problem replaced with the Ising model in a practical time, there are various search algorithms such as simulated annealing (SA) and simulated quantum annealing (SQA).

The combinatorial optimization problem is formulated by an energy function including a plurality of state variables. The energy function may also be referred to as an objective function, an evaluation function, or the like. The energy function includes a plurality of state variables corresponding to a plurality of spins included in the Ising model and a weighting coefficient indicating a magnitude of interaction between a certain state variable and another state variable. For example, a value such as a cost value representing a cost of a minimization target or a penalty value representing a violation of a constraint condition imposed on the problem is reflected in the weighting coefficient. By using the search algorithm described above, the information processing apparatus searches for a ground state of the Ising model in which a value of the energy function is minimized. The ground state corresponds to an optimal solution of the combinatorial optimization problem.

A problem represented by the energy function may be solved by dividing the problem into a plurality of subproblems in accordance with the number of state variables handled in the problem, for example, a scale of the problem.

For example, there has been proposed an information processing apparatus that includes a plurality of Ising boards coupled via a communication channel and performs a ground state search of an Ising model. In the proposed information processing apparatus, an Ising form problem is divided into a plurality of subproblems, and these subproblems are respectively distributed to individual Ising boards. Each subproblem is a problem of a single Ising model form independent of the other subproblems. A semiconductor apparatus that performs a ground state search of an Ising model with an inequality constraint has also been proposed.

[Citation List]

[Patent Literature]

[PTL 1] Japanese Laid-open Patent Publication No. 2020-160755.
[PTL 2] Japanese Laid-open Patent Publication No. 2019-179364.

[Summary]

[Problem]

When a problem is solved by dividing the problem into a plurality of subproblems, the plurality of subproblems and state variable groups respectively corresponding to the subproblems are allocated to nodes. Each node fixes a value of a state variable that does not belong to a state variable group allocated to the self-node, and changes a state variable belonging to the state variable group allocated to the self-node, thereby searching for a solution. Each node may update state variables that do not belong to the state variable group allocated to the self-node in accordance with solution sharing by communicating with another node. Meanwhile, an update frequency is decreased.

In a certain node, in a case where a state variable that does not belong to a state variable group allocated to the self-node is fixed to a specific value, there may be a state variable of which the value may not be changed in the state variable group allocated to the self-node due to an influence of a weighting coefficient related to the state variable. Thus, there is a problem that a state variable that may be changed in the node is limited and is likely to fall into a local solution, and a solution obtained by a plurality of nodes as a whole is deteriorated.

An object of an aspect of the present disclosure is to provide an information processing system, an information processing method, and a program that improve solution finding performance.

[Solution to Problem]

According to an aspect of the embodiments, an information processing system for a solution to a problem represented by an energy function including a plurality of state variables, includes a first node and one or more second nodes. The first node configured to search for the solution to a problem by changing a value of a state variable among one or more first state variables belong to first state variable group assigned corresponding to a first subproblem among a plurality of subgroups that is generated by dividing the problem, the first state variable group including at least of a part of the plurality of state variables, the first subproblem being assigned to the first node. The first nodes is further configured to: hold a first weighting coefficient indicating a weight for a first pair of two state variables that is assigned to the first node, hold a second weighting coefficient indicating a weight for a second pair of a first state variable that is assigned to the first node and a second state variable that is assigned to any of the one or more second nodes or a penalty value used for calculation of the second weighting coefficient, multiplex the second weighting coefficient or the penalty value by a coefficient which is larger than 0 and smaller than 1, calculate, for a value of each of the one or more first state variables, a change amount of a value of the energy function caused by changing the value of each of the one or more fist state variables, based on a third weighting coefficient that is a result of multiplying the second weighting coefficient by the coefficient, or a fourth weighting coefficient for the second pair calculated by using a result of multiplying the penalty value by the coefficient, and the first weighting coefficient, and determine the state variable of which the value is to be changed, based on the change amount calculated for each of the one or more first state variables.

Further, According to an aspect of the embodiments, an information processing method is provided. Further, according to an aspect of the embodiments, a program is provided.

[Effects of Invention]

In the aspect, it is possible to improve solution finding performance.

[Brief Description of Drawings]

FIG. 1 is a diagram describing an information processing system according to a first embodiment;
FIG. 2 is a flowchart illustrating a processing example of the information processing system;
FIG. 3 is a diagram illustrating an example of an information processing system according to a second embodiment;
FIG. 4 is a diagram illustrating a hardware example of a node;
FIG. 5 is a diagram illustrating a function example of the information processing system;
FIG. 6 is a diagram illustrating an example of fixed bits in a subproblem;
FIG. 7 is a diagram illustrating an example of information held by each node;
FIG. 8 is a diagram illustrating an example of information held in a solution buffer;
FIG. 9 is a diagram illustrating an example of weighting coefficients related to state variables in another region;
FIG. 10 is a diagram illustrating an example of a state variable of an own region influenced by a state variable of another region;
FIG. 11 is a diagram illustrating an example of scaling of weighting coefficients;
FIG. 12 is a flowchart illustrating an example of overall control on a search;
FIG. 13 is a flowchart illustrating a first example of a solution update after the search;
FIG. 14 is a flowchart illustrating an example of solution transmission to another node;
FIG. 15 is a flowchart illustrating another example of solution reception from still another node;
FIG. 16 is a flowchart illustrating an example of fixing a variable during a search;
FIG. 17 is a flowchart illustrating a second example of a solution update after the search;
FIG. 18 is a diagram illustrating another hardware example of the node; and
FIG. 19 is a diagram illustrating an example of an information processing system using a plurality of search methods.

[Description of Embodiments]

Hereinafter, the present embodiments will be described with reference to the drawings.

[First Embodiment]

A first embodiment will be described.

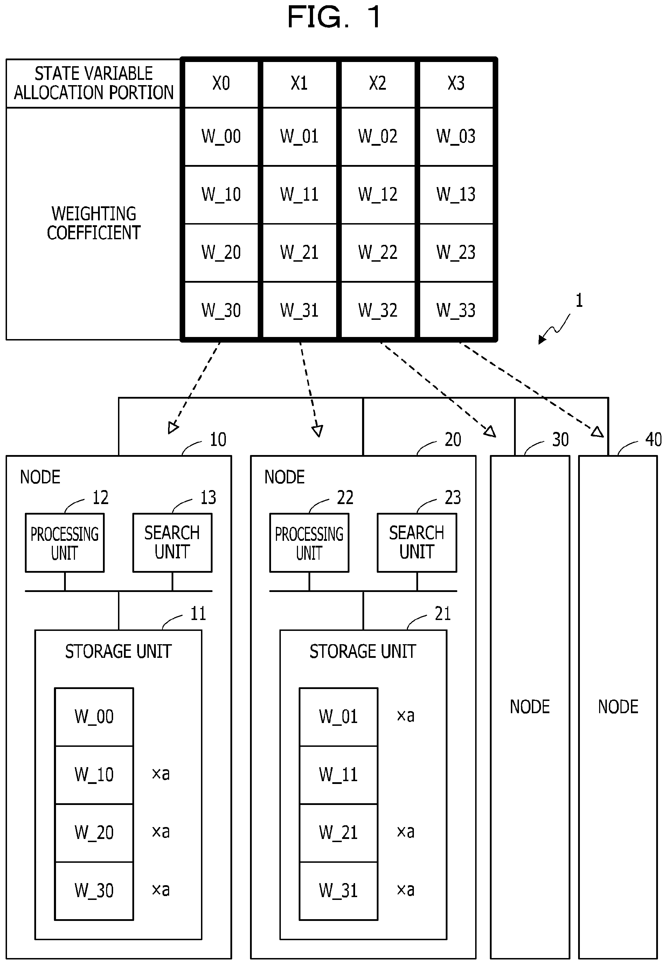

FIG. 1 is a diagram describing an information processing system according to the first embodiment.

An information processing system 1 obtains a solution to a problem represented by an energy function of an Ising model, and outputs the obtained solution. The problem represented by the energy function of the Ising model includes a combinatorial optimization problem.

The energy function includes a plurality of state variables corresponding to a plurality of spins included in the Ising model. The state variables are binary variables each taking a value of 1 or 0. For example, "-1" of a spin in the Ising model corresponds to a value "0" of the state variable. "+1" of a spin in the Ising model corresponds to a value "1" of the state variable. Therefore, the state variable may also be referred to as a bit taking a value of 0 or 1. The solution is represented by the plurality of state variables. A solution represented by the entirety of the plurality of state variables may also be referred to as an "entire solution". The combinatorial optimization problem is converted into a problem of finding a solution that minimizes a value of the energy function. The solution that minimizes the value of the energy function corresponds to a ground state of the Ising model, and corresponds to an optimal solution to the combinatorial optimization problem.

The information processing system 1 includes a plurality of nodes. The information processing system 1 divides the problem represented by the energy function into a plurality of subproblems as bits, and processes the plurality of subproblems in a distributed manner by the plurality of nodes. The information processing system 1 may be implemented by one housing having a plurality of nodes coupled to an internal bus, or may be implemented by a plurality of nodes coupled to a network such as a local area network (LAN), a wide area network (WAN), or the Internet.

In the example illustrated in FIG. 1, the information processing system 1 includes nodes 10, 20, 30, and 40. Meanwhile, the number of nodes included in the information processing system 1 may be a number other than four. A problem to be solved, for example, subproblems obtained by dividing the entire problem are allocated to each of the nodes 10, 20, 30, and 40. Energy of the Ising model of the entire problem is defined by, for example, an energy function E(x) in Equation (1).

[Equation 1]

$$E(\boldsymbol{x}) = -\sum_{\langle i,j \rangle}^{N} W_{ij} x_i x_j - \sum_{i=1}^{N} b_i x_i + c \qquad (1)$$

A state vector x has a plurality of state variables as elements, and represents a state of an Ising model. In a case of a problem of maximizing the value of the energy function, a sign of the energy function may be reversed.

The first term on the right side of Equation (1) adds up the products of two state variable values and weighting coefficients without missing and overlapping among all combinations of two state variables selectable from N state variables included in the Ising model. $x_i$ is an i-th state variable. $x_j$ is a j-th state variable. $W_{ij}$ is a weighting coefficient indicating a weight between the i-th state variable and the j-th state variable. The weighting coefficient indicates, for example, a strength of combination of two state variables. $W_{ii} = 0$. $W_{ij} = W_{ji}$.

The second term on the right side of Equation (1) is a sum of products of values of state variables and respective bias of all the state variables. $b_i$ indicates a bias for the i-th state variable. c is a constant. A combination of the values of the state variables that minimizes the value of the energy function of Equation (1) is the optimal solution to the problem. The value of the energy function may be simply referred to as energy. The energy may also be referred to as an evaluation value or an index for determining a quality of a solution. As the energy is smaller, the solution is evaluated to be better.

For dividing the entire problem into subproblems and solving the subproblems, each node may hold a weighting coefficient corresponding to a state variable handled by the self-node. The energy of the Ising model regarding a subproblem handling the state variables i = 1 to K (K < N), which are a part of N (N is an integer equal to or larger than 2) state variables, is defined by, for example, an energy function E'(x) in the following Equation (2).

[Equation 2]

$$E'(\boldsymbol{x}) = -\sum_{\langle i,j \rangle}^{K} W_{ij} x_i x_j - \sum_{i=1}^{K} b'_i x_i + c' \qquad (2)$$

$b'_i$ and c' in Equation (2) may be respectively represented by Equations (3) and (4).

[Equation 3]

$$b'_i = b_i + \sum_{j=K+1}^{N} W_{ij} x_j \tag{3}$$

[Equation 4]

$$c' = c - \sum_{i=K+1}^{N} b_i x_i - \sum_{i=K+1}^{N} \sum_{j>i}^{N} W_{ij} x_i x_j \tag{4}$$

When searching for a solution to the subproblem handling the state variables i = 1 to K (K < N), the values of the state variables i = K + 1 to N are fixed. The second term on the right side of Equation (3) represents a contribution to the bias by the state variables set to be the fixed values, and the second term and the third term on the right side of Equation (4) represent contributions to the constant by the state variables set to be the fixed values.

At this time, the energy difference $h_i$ when the value of the i-th state variable is changed is represented by Equation (5).

[Equation 5]

$$h_i = \sum_{j}^{K} W_{ij} x_j + b'_i \tag{5}$$

For example, the node calculates, for each of state variables $x_1$ to $x_K$, a change amount of value of the energy function E'(x) by changing a value of one of the state variables $x_1$ to $x_K$, based on Equation (5), and stochastically accepts a change in such a manner that the change with which E'(x) is reduced is prioritized. The change amount of energy $\Delta E'_i$ due to the change in $x_i$ among the state variables $x_1$ to $x_K$ may be represented by the following Equation (6).

[Equation 6]

$$\Delta E'_i = -\delta x_i h_i$$
$$= -\delta x_i \left( \sum_{j}^{K} W_{ij} x_j + b'_i \right) \tag{6}$$

In Equation (6), when the state variable $x_i$ changes from 1 to 0, $\delta x_i$ is -1, and when the state variable $x_i$ changes from 0 to 1, $\delta x_i$ is +1. As the absolute values of $W_{ij}$ are larger, the value added to the energy is larger.

For example, when a SA method or a replica exchange method is used, a Metropolis method or a Gibbs method is used to determine a probability of a transition of the Ising model from a certain state to the next state due to a change in certain state variable. For example, the node also stochastically allows a change with which the value of the energy function E'(x) is increased, in accordance with comparison between the change amount of energy and a noise value. The noise value is obtained based on a temperature value or a random number. As the temperature value increases, an amplitude of the noise value increases. As the amplitude of the noise value increases, a state transition with a large increase in energy is more likely to be acceptable.

When determining a state variable of which the value is to be changed, the node uses a bias $b'_i$ represented by the following Equation (7), instead of Equation (3) that is normally used.

[Equation 7]

$$b'_i = b_i + \alpha \sum_{j=K+1}^{N} W_{ij}x_j \quad (0 < \alpha < 1) \quad\quad (7)$$

For example, the node scales the weighting coefficient related to the state variable group that is not allocated to the self-node by using a coefficient $\alpha$, thereby reducing the influence of the weighting coefficient on the change amount of energy. The coefficient $\alpha$ is a real number larger than 0 and smaller than 1. Meanwhile, when the node obtains energy of a solution, the bias b' represented by Equation (3), which is not scaled with $\alpha$, is used.

The weighting coefficient $W_{ij}$ is represented as $W_{ij} = C_{ij}+P_{ij}$ by using the cost value $C_{ij}$ representing a cost to be minimized in a problem and the penalty value $P_{ij}$ representing a violation of a constraint condition in the problem. In a case where the node holds the cost value $C_{ij}$ and the penalty value $P_{ij}$ corresponding to $W_{ij}$ of the self-node, the node may obtain $W_{ij}$ by scaling the penalty value $P_{ij}$ with $\alpha$. In this case, the weighting coefficient may be represented by a linear combination of the cost value and the penalty value after scaling, and may be represented by, for example, $W_{ij} = C_{ij}+\alpha P_{ij}$. The node may use the weighting coefficient $W_{ij}$ obtained by scaling the penalty value $P_{ij}$ with $\alpha$ for calculation of the bias $b'_i$ in Equation (3). A state that violates the constraint is represented by the penalty value $P_{ij}$ as a state in which energy is relatively high, and the penalty value $P_{ij}$ has a very large influence on an increase amount of energy due to the weighting coefficient.

Although the subproblem in which the state variables of i = 1 to K are handled has been described in the above example, energy and the change amount of energy are calculated in the same manner for other subproblems in which the state variables of other sections of the index i are handled. A state variable group allocated to each node in accordance with a subproblem is a subset of all the plurality of state variables, and may be a continuous section or a discontinuous section of the index i. For example, each of the nodes may obtain a solution to a subproblem corresponding to a state variable group in which a first section and a second section are not continuous, for the first section and the second section that are continuous for the index i.

For example, the information processing system 1 may be connected to a control apparatus (not illustrated). Based on information on the combinatorial optimization problem input by a user, the control apparatus formulates the combinatorial optimization problem by an energy function of the Ising model. The control apparatus divides a problem represented by an energy function into a plurality of subproblems, and allocates the plurality of subproblems to the node 10, 20, 30, and 40. The control apparatus may be included in the information processing system 1. Any of the nodes 10, 20, 30, and 40 may have a function of the control apparatus.

The node 10 includes a storage unit 11, a processing unit 12, and a search unit 13. The node 20 includes a storage unit 21, a processing unit 22, and a search unit 23. Although not illustrated, the nodes 30 and 40 also include storage units, processing units, and search units in the same manner as the nodes 10 and 20. Although the processing units 12 and 22 and the search units 13 and 23 of the nodes 10 and 20 will be mainly described below as an example, the processing units and the search units of the nodes 30 and 40 also execute the same processing on the subproblem allocated to the self-nodes. All of the state variables for the problem to be solved are covered by all of the nodes 10, 20, 30, and 40.

For example, a state variable allocation portion for the node 10 is a state variable group X0 among all the state variables. A state variable allocation portion for the node 20 is a state variable group X1 among all the state variables. A state variable allocation portion for the node 30 is a state variable group X2 among all the state variables. A state variable allocation portion for the node 40 is a state variable group X3 among all the state variables.

The storage units 11 and 21 may be implemented by a volatile storage device such as a dynamic random-access memory (DRAM), and may be implemented by a non-volatile storage device such as a hard disk drive (HDD) or a flash memory. Each of the storage units 11 and 21 holds the solutions acquired by the nodes 10 and 20, for example, the entire solution. A storage region of the storage units 11 and 21 that holds the solution is referred to as a solution buffer.

The processing units 12 and 22 may include a central processing unit (CPU), a digital signal processor (DSP), an application-specific integrated circuit (ASIC), a field-programmable gate array (FPGA), or the like. The processing unit 12 may be a processor that executes a program. The "processor" may include a set (multiprocessor) of a plurality of processors.

The search units 13 and 23 each search for a solution to the subproblem allocated to the self-node. For example, the search units 13 and 23 are implemented by dedicated hardware. For example, a search circuit implemented by using an integrated circuit such as an FPGA may function as the search unit 13 or the search unit 23. Meanwhile, at least one of the search units of the node 10, 20, 30, and 40 including the search units 13 and 23 may be implemented by a processor executing a predetermined program. Examples of a search method used by the search units of the node 10, 20, 30, and 40 including the search units 13 and 23 include SA, genetic algorithms (GA), SQA, tabu search, and the like. The search method is not limited to these, and other search methods may be used. A search method used in the search units of the node 10, 20, 30, and 40 including the search units 13 and 23 may be the same, or a certain search unit may be different from the other search unit.

An allocation region portion of a solution to which a subproblem is allocated among solutions searched by a certain node is considered. The allocation region portion of the solution is a set of values of a state variable group corresponding to the subproblem among the solutions. For example, a first subproblem is allocated to the node 10. The state variable group X0 corresponds to the first subproblem. An allocation region portion of a solution corresponding to the first subproblem is a set of values of the state variables $x_1$ to $x_K$ belonging to the state variable group X0, for example. A second subproblem is allocated to the node 20. The state variable group X1 corresponds to the second subproblem. An allocation region portion of a solution corresponding to the second subproblem is, for example, a set of values of the state variable $x_{K+1}$ to $x_L$ (L > K+1) belonging to the state variable group X1. Meanwhile, a part of a state variable group allocated to a certain node and a part of another state variable group allocated to another node may overlap with each other.

Although not illustrated, the search unit 13 includes a storage unit such as a static random-access memory (SRAM) that holds the state variable group X0, a weighting coefficient between the state variables belonging to the state variable group X0, and the like. In the same manner, the search unit 23 includes a storage unit that holds the state variable group X1, a weighting coefficient between state variables belonging to the state variable group X1, and the like. The information stored in the respective storage units of the search units 13 and 23 is used by the respective search units 13 and 23 to search for solutions to subproblems.

The search for the solution by each of the search units 13 and 23 is repeatedly executed, for example, for a predetermined period, and the solution obtained by each search is output. As will be described below, solution information in each of the search units 13 and 23 is initialized to one of the entire solution held in the solution buffer immediately before a start of the next solution search. The solution information includes information on a state variable group of which the value is to be fixed, other than the state variable group handled by the self-node among the entire state variables. Examples of such solution information include b', c', and the like in the energy function E'(x) in Equation (2) described above. By initializing the solution information, an initial solution for the search is reset in the search units 13 and 23, and b' or c' are reset. As described above, b' scaled with $\alpha$ is set in the search units 13 and 23.

The storage unit 11 stores information used for processing by the processing unit 12. The storage unit 11 stores weighting coefficients. The weighting coefficient stored in the storage unit 11 may be a portion corresponding to the state variable group X0. For example, the storage unit 11 may store N×K weighting coefficients among N×N weighting coefficients. Each of the weighting coefficients is used to calculate energy for a solution or initialize solution information.

For example, the storage unit 11 holds weighting coefficient groups W_00, W_10, W_20, and W_30 for the state variable group X0 allocated to the node 10. A numerical value after the underscore "_" of the sign indicating the weighting coefficient indicates an index range corresponding to a numerical value included in the notation of the state variable group X0 to X3. For example, "0" is an index range of 1 to K. In this case, W_00 is a portion of {$W_{ij}$} ($1 \leq i \leq K$, $1 \leq j \leq K$) in the entire weighting coefficient W.

For the state variable group X1 allocated to the node 20, the storage unit 21 holds weighting coefficient groups W_01, W_11, W_21, and W_31. The storage unit of the node 30 holds weighting coefficient groups W_02, W_12, W_22, and W_32, for the state variable group X2 allocated to the node 30. The storage unit of the node 40 holds weighting coefficient groups W_03, W_13, W_23, and W_33, for the state variable group X3 allocated to the node 40.

Meanwhile, when obtaining the bias b' represented by Equation (7) described above, the processing unit 12 scales the weighting coefficient groups W_10, W_20, and W_30 related to the state variables that do not belong to the state variable group X0 with $\alpha$, and sets the obtained b' in the search unit 13. When obtaining the bias b' represented by Equation (7) described above, the processing unit 22 scales the weighting coefficient groups W_01, W_21, and W_31 related to the state variables that do not belong to the state variable group X1 with $\alpha$, and sets the obtained b' in the search unit 23.

Although not illustrated, in the same manner as the processing units 12 and 22, the processing units of the nodes 30 and 40 obtain b' by using a value obtained by scaling the weighting coefficient with $\alpha$, and set b' in the search units of the nodes 30 and 40. For example, when obtaining the bias b' represented by Equation (7) described above, the processing unit of the node 30 scales the weighting coefficient groups W_02, W_12, and W_32 related to the state variables that do not belong to the state variable group X2 with a. When obtaining the bias b' represented by Equation (7) described above, the processing unit of the node 40 scales the weighting coefficient groups W_03, W_13, and W_23 related to the state variables that do not belong to the state variable group X3 with $\alpha$.

The storage unit 11 stores a solution selected based on the energy function E(x) of the entire problem represented by Equation (1). A plurality of solutions may be held in the storage unit 11. The number of solutions held in the storage unit 11 is a predetermined number preset in the node 10. Energy of Equation (1), corresponding to the solution, is held in the storage unit 11 in association with the solution. The energy is calculated by using an original weighting coefficient that is not scaled with $\alpha$.

In this manner, each of the plurality of subproblems generated by dividing the combinatorial optimization problem to be solved is allocated to the node 10, 20, 30, and 40. Each of the nodes 10, 20, 30, and 40 searches for a solution of the combinatorial optimization problem by changing values of state variables belonging to a state variable group corresponding to the subproblem allocated to the self-node, among the plurality of state variables. Each of the nodes 10, 20, 30, and 40 holds a plurality of solutions including a first solution to which the searched solution is reflected. The first solution may be the searched solution or may be a solution obtained by replacing the same part of the solution held in the storage unit 11 with a set of values of the state variable group X0 among the searched solutions. For example, the node 10 preferentially selects a predetermined number of solutions having low energy, among the first solution to which the solution searched by the node 10 is reflected and the plurality of solutions held in the storage unit 11, and holds the predetermined number of solutions in the storage unit 11.

The node 10 transmits at least one solution of the plurality of solutions held by the node 10 to the node 20 among the plurality of nodes. For example, the node 10 preferentially selects at least one solution having low energy, among the plurality of solutions held in the storage unit 11, and transmits the solution to the node 20. The node 10 may transmit the solution to another node other than the node 20.

Based on the solution received from the node 10, the node 20 updates at least some of the plurality of solutions held in the node 20. For example, the node 20 preferentially selects a predetermined number of solutions having low energy, among the solution received from the node 10 and the plurality of solutions held in the storage unit 21, and holds the selected solution in the storage unit 21.

Thus, the appropriate solution searched by the node 10 is shared with the node 20. In the same manner, the node 20 may transmit a solution to the node 10, to share the appropriate solution obtained by the node 20 between the nodes 10 and 20. Transmission and reception of the solution between each node and another node may be performed synchronously or asynchronously.

By the processing described above, each of the nodes 10, 20, 30, and 40 updates the solution held by the self-node based on the solution searched by the self-node, and updates the solution held by the self-node based on the solutions held by the other nodes. Each of the nodes 10, 20, 30, and 40 may initialize the solution information in the self-node, based on the solution held by the self-node thus updated, and may search for the next solution.

For example, after a certain solution is obtained by the search unit 13, immediately before the next search is performed, the processing unit 12 determines a value of a state variable other than the state variable group X0 for the next search, based on the plurality of solutions held in the storage unit 11, and changes b' or c'. In the same manner as the processing unit 12, the processing unit 22 performs processing of determining a value of a state variable other than the state variable group X1.

Various methods are considered as methods by which the processing unit 12 determines the value of the state variable other than the state variable group X0, based on the solutions held in the storage unit 11.

In one example, the processing unit 12 selects a solution corresponding to the smallest energy obtained by Equation (1) among the plurality of solutions held in the storage unit 11, and uses the value of each state variable in the state variable group X0 for the selected solution.

Alternatively, the processing unit 12 may freely select one of the plurality of solutions held in the storage unit 11, and use the value of each state variable other than the state variable group X0 for the selected solution. At this time, in a case where three or more solutions are held in the storage unit 11, the processing unit 12 may freely select the one solution, from k (for example, two or three) solutions in ascending order of energy. Alternatively, the processing unit 12 may perform comparison among the values of the respective state variables other than the state variable groups X0 for the plurality of respective solutions held in the storage unit 11, select a solution with the largest number of state variables having the values which coincide with the other solutions, and use values of the respective state variables in the solution.

In this manner, the processing unit 12 determines the value of each state variable other than the state variable group X0, based on the solution held in the storage unit 11, and initializes solution information to be set in the search unit 13. For example, for the state variable group X0, the search unit 13 starts searching for the next solution with the value of each state variable included in the selected solution as a start state.

In the same manner as the processing unit 12, the processing unit 22 determines a value of each state variable other than the state variable group X1, based on the solution held in the storage unit 21, initializes solution information to be set in the search unit 23, and causes the search unit 23 to start the search for the next solution.

Each of the nodes 10, 20, 30, and 40 repeatedly executes the processing described above, and outputs the solution held in the storage unit of the self-node to the control apparatus when a predetermined time elapses. The control apparatus converts the solution acquired from the nodes 10, 20, 30, and 40 into a form of a solution for the combinatorial optimization problem, and causes a display apparatus to display the solution or transmits the solution to a terminal device used by the user over a network, to provide the solution to the user. For example, the control apparatus may provide the user with a solution corresponding to the smallest energy acquired from the nodes 10, 20, 30, and 40, or may provide the user with a plurality of solutions acquired from the nodes 10, 20, 30, and 40.

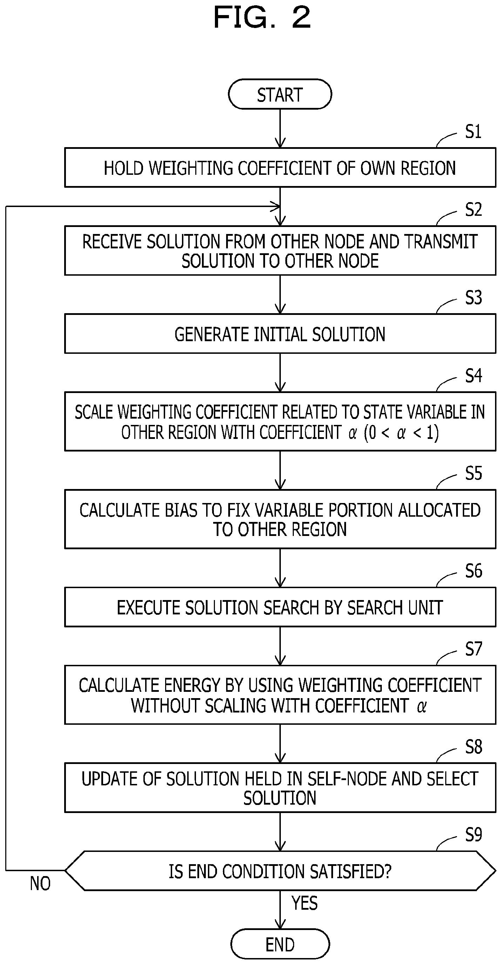

FIG. 2 is a flowchart illustrating a processing example of the information processing system.

Although the description will be given with the node 10, the nodes 20, 30, and 40 also execute the same procedure.

(S1) The processing unit 12 acquires a weighting coefficient of the own region, and holds the weighting coefficient in the storage unit 11. A weighting coefficient of the own region related to the node 10 is a weighting coefficient belonging to the weighting coefficient groups W_00, W_10, W_20, and W_30 corresponding to the state variable group X0 allocated to the node 10.

(S2) The processing unit 12 executes reception of a solution from another node and transmission of the solution to the other node. As described above, among a plurality of solutions held in the solution buffer of the self-node, the processing unit 12 preferentially transmits a solution having low energy to another node. The processing unit 12 receives the solution selected in the same manner from the other node. Among the solutions received from the other nodes and the solutions held in the solution buffer of the self-node, the processing unit 12 preferentially holds a solution having lower energy in the solution buffer of the self-node. In a case where the procedure in FIG. 2 is executed for the first time, step S2 may be skipped.

(S3) The processing unit 12 generates an initial solution for a search. As described above, the processing unit 12 preferentially uses the solution having low energy, among the plurality of solutions held by the self-node to generate the initial solution. For example, the processing unit 12 may set a solution having the lowest energy, among the plurality of solutions held by the self-node as the initial solution. For example, in a case where step S3 is executed for the first time, the processing unit 12 may acquire an initial solution and energy of the initial solution from outside. The processing unit 12 sets the initial solution in the search unit 13.

(S4) The processing unit 12 scales a weighting coefficient related to a state variable in another region with the coefficient $\alpha$ ($0 < \alpha < 1$). Weighting coefficients related to state variables in other regions for the node 10 are weighting coefficients belonging to the weighting coefficient groups W_10, W_20, and W_30. The scaling means that the corresponding weighting coefficient is multiplied by $\alpha$. Alternatively, the processing unit 12 may multiply the weighting coefficient by $\alpha$ by performing a shift operation on a bit string representing the corresponding weighting coefficient.

(S5) The processing unit 12 calculates the bias b' based on Equation (7) to fix a variable portion allocated to the other region. The processing unit 12 sets the calculated bias b' in the search unit 13. The processing unit 12 causes the search unit 13 to start a solution search.

(S6) The search unit 13 executes the solution search based on the set initial solution and the bias b'. Based on the bias b', the search unit 13 calculates the change amount of energy by Equation (6), and determines a state variable of which the value is to be changed based on the change amount. The weighting coefficient scaled with $\alpha$ is reflected in the bias b'. Accordingly, it may be said that the search unit 13 calculates the change amount of energy by changing the value of a certain state variable based on the weighting coefficient scaled with $\alpha$. After executing the solution search for a predetermined time, the search unit 13 ends the solution search.

(S7) The processing unit 12 acquires a solution searched by the search unit 13, and calculates energy corresponding to the newly acquired solution, based on a weighting coefficient not scaled with the coefficient $\alpha$ and energy of the initial solution.

(S8) The processing unit 12 updates the solution held in the solution buffer of the self-node, and selects a solution. For example, the processing unit 12 preferentially holds a solution having lower energy, among the newly obtained solutions and the solutions obtained in the node 10 in the solution buffer of the self-node. The processing unit 12 preferentially selects a solution having low energy as a solution to be output.

(S9) The processing unit 12 determines whether or not an end condition is satisfied. For example, when the end condition is satisfied, the processing unit 12 outputs the solution selected in step S8 to the control apparatus or the like, and ends the processing. When the end condition is not satisfied, the processing unit 12 advances the processing to step S2. Tn end condition is, for example, that a certain period of time is elapsed since a start of execution of the procedure in FIG. 2.

The node 10 may hold cost values and penalty values corresponding to the weighting coefficient groups W_00, W_10, W_20, and W_30, as described above. In this case, the processing unit 12 may execute scaling in step S4 on the penalty value, obtain a weighting coefficient group used for the search by the search unit 13, and calculate a bias in step S5 by using the weighting coefficient group. At this time, the processing unit 12 may calculate the bias by Equation (3) by using a weighting coefficient obtained from a result obtained by multiplying the penalty value by $\alpha$. In the same manner as the node 10, the penalty values of the nodes 20, 30, and 40 may be scaled with the coefficient $\alpha$. The scaling the penalty value with the coefficient $\alpha$ may suppress an influence of the coefficient $\alpha$ on the cost value, rather than scaling the weighting coefficient with the coefficient $\alpha$.

In this manner, the information processing system 1 searches for a solution to a problem represented by an energy function including a plurality of state variables. The information processing system 1 includes a plurality of nodes that search for a solution by changing values of state variables belonging to a state variable group allocated in response to a subproblem allocated to the self-node, among a plurality of subproblems generated by dividing the problem. The state variable group has some state variables among the plurality of state variables.

Each of the plurality of nodes holds a first weighting coefficient indicating a weight for a first pair of two state variables allocated to the self-node. Each of the plurality of nodes holds a second weighting coefficient indicating a weight for a second pair of a state variable allocated to the self-node and a state variable allocated to another node, or a penalty value used for calculation of the second weighting coefficient. Each of the plurality of nodes multiplies the second weighting coefficient or the penalty value by the coefficient α which is larger than 0 and smaller than 1. Each of the plurality of nodes calculates, for each state variable belonging to the state variable group allocated to the self-node, a change amount of a value of an energy function caused by changing a value of the state variable, based on a third weighting coefficient which is a result of multiplying the second weighting coefficient by the coefficient α, or a fourth weighting coefficient for the second pair calculated by using a result of multiplying the penalty value by the coefficient α, and the first weighting coefficient. Each of the plurality of nodes determines a state variable of which the value is to be changed, based on the change amount calculated for each state variable allocated to the self-node. The "change amount of value of the energy function" referred to herein is a change amount of alternative energy for control of determining a state variable of which the value is to be changed, and may also be referred to as the change amount of energy adjusted with the coefficient α.

Thus, the information processing system 1 may improve solution finding performance. The information processing system 1 may solve a large-scale problem that is difficult to solve by one node, by the plurality of nodes in a distributed manner. By sharing an appropriate solution found by a certain node with another node, the information processing system 1 collectively improves the solution by the plurality of nodes, thereby effectively searching for the solution.

At this time, the node 10 may reduce the influence of the weighting coefficient related to the corresponding state variable on the change amount of energy, by scaling the weighting coefficient or the penalty value related to the state variable in the other region with the coefficient α, among the weighting coefficients in the own region. Thus, even in a case where the state variable allocated to the other node other than the node 10 is fixed to a specific value, for example, 1, it is possible to suppress an increase amount of energy due to the value of the state variable.

Therefore, since the state variable handled by another node is fixed to 1, even in a case where it is normally difficult to change the state variable handled by the self-node to 1 due to the influence of the penalty value, it is easy to change the state variable to 1. As a result, a transition of the state variable in the node 10 is promoted, and a possibility that an appropriate solution may be reached is increased. In the same manner as the node 10, in the nodes 20, 30, and 40, the possibility of reaching an appropriate solution is increased. Accordingly, the possibility that a better solution may be reached is increased in the entire node 10, 20, 30, and 40. Thus, the information processing system 1 may improve the solution finding performance.

[Second Embodiment]

Next, a second embodiment will be described.

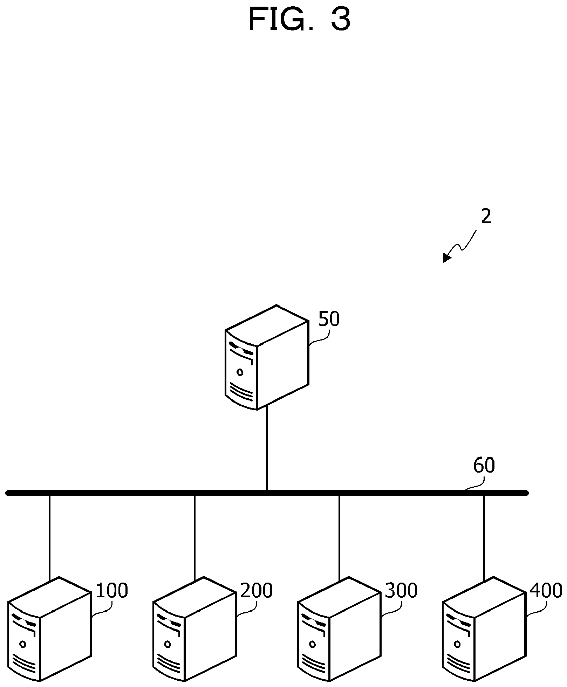

FIG. 3 is a diagram illustrating an example of an information processing system according to the second embodiment.

An information processing system 2 includes a control apparatus 50, and nodes 100, 200, 300, and 400. The control apparatus 50, and the nodes 100, 200, 300, and 400 are connected to a network 60. The network 60 may be a LAN, a WAN, the Internet, or the like. The information processing systems 2 may include a plurality of nodes other than four nodes.

The control apparatus 50 accepts problem data of a combinatorial optimization problem input from a user. The control apparatus 50 converts the problem data into a problem represented by the energy function of the Ising model. The problem is a problem of minimizing the energy function of the Ising model.

The energy function may include a cost term representing a cost to be minimized or a penalty term representing a constraint. For example, the constraint that the number of state variables having a specific value (for example, "1") is only one in a predetermined group of indices of state variables is represented by a penalty term. A state that violates the constraint is represented by a penalty term as a state having relatively high energy.

The energy function of the entire problem is formulated as in Equation (1). Equation (1) is an energy function formulated in a quadratic unconstrained binary optimization (QUBO) form. $W_{ij}$, $b_i$, and $c$ in Equation (1) are calculated when the formulation is implemented.

The control apparatus 50 divides the problem represented by the energy function of the Ising model into a plurality of subproblems, and allocates the subproblems to the nodes 100, 200, 300, and 400. After the information processing system 2 performs a solution search for a predetermined time, the control apparatus 50 acquires solutions held by the nodes 100, 200, 300, and 400, converts the solutions into solutions in a form for the combinatorial optimization problem, and provides the solutions to the user. The control apparatus 50 may be implemented by an information processing apparatus such as a server computer, for example.

Each of the nodes 100, 200, 300, and 400 searches for a solution to the subproblem allocated to the self-node. The nodes 100, 200, 300, and 400 include accelerators that search for the solution. The accelerator is hardware for obtaining a solution that minimizes energy. Meanwhile, a solution search function provided by at least one of the nodes 100, 200, 300, and 400 may be implemented by software. The nodes 100, 200, 300, and 400 may be implemented by an information processing apparatus such as a computer, for example.

The accelerators of the respective nodes 100, 200, 300, and 400 may use different search methods, for example, search algorithms to search for solutions, or at least two of the accelerators may use the same search method to search for the solutions. Examples of the search method include SA, GA, SQA, tabu search, and the like.

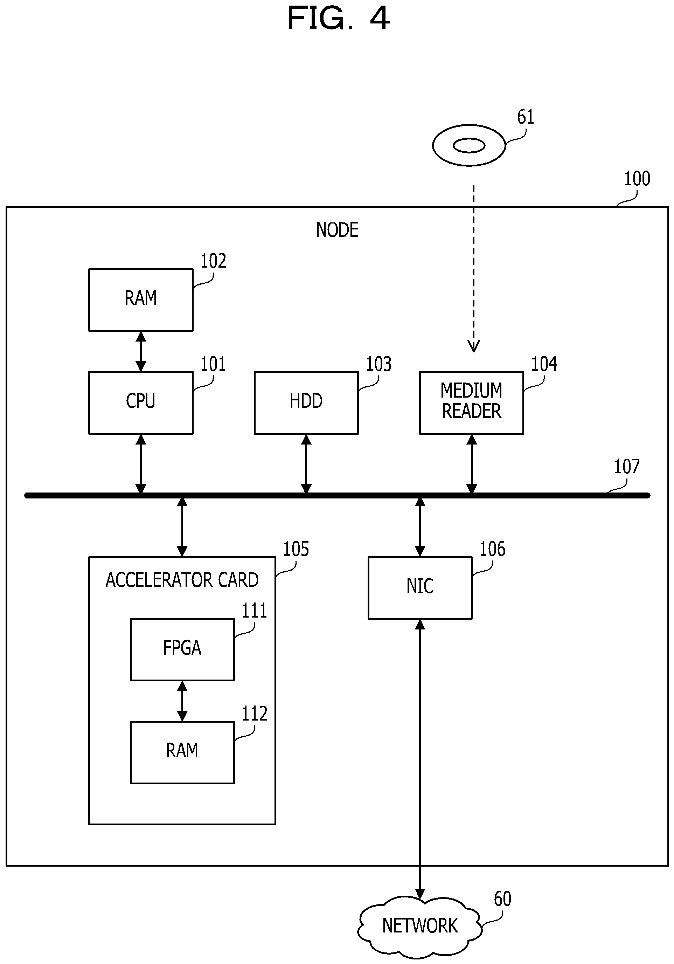

FIG. 4 is a diagram illustrating a hardware example of a node.

The node 100 includes a CPU 101, a RAM 102, an HDD 103, a medium reader 104, an accelerator card 105, a network interface card (NIC) 106, and a bus 107. The CPU 101 is an example of the processing units 12 and 22 according to the first embodiment. The RAM 102 is an example of the storage units 11 and 21 of the first embodiment. As will be described below, the accelerator card 105 implements a function of a search unit that searches for solutions to subproblems obtained by dividing the combinatorial optimization problem. The accelerator card 105 is an example of the search units 13 and 23 according to the first embodiment.

The CPU 101 is a processor that executes a command of a program. The CPU 101 loads at least a part of a program or data stored in the HDD 103 into the RAM 102, and executes the program. The CPU 101 may include a plurality of processor cores. The node 100 may include a plurality of processors. Processing described below may be executed in parallel by using the plurality of processors or processor cores. A set of the plurality of processors may be referred to as a "multiprocessor" or merely referred to as a "processor" in some cases.

The RAM 102 is a volatile semiconductor memory that temporarily stores the program executed by the CPU 101 or data used for the operation by the CPU 101. The node 100 may include a memory of a type different from the RAM, or include a plurality of memories.

The HDD 103 is a non-volatile storage device that stores data as well as programs of software such as an operating system (OS), middleware, and application software. The node 100 may include a storage device of a different type such as a flash memory and an SSD, or include a plurality of non-volatile storage devices.

The medium reader 104 is a reading device that reads programs and data recorded in a recording medium 61. As the recording medium 61, for example, a magnetic disk, an optical disc, a magneto-optical disk (MO), a semiconductor memory, or the like may be used. The magnetic disk includes a flexible disk (FD) or an HDD. The optical disc includes a compact disc (CD) or a Digital Versatile Disc (DVD).

The medium reader 104 copies, for example, the program and data read from the recording medium 61 to another recording medium such as the RAM 102 or the HDD 103. The read program is executed by, for example, the CPU 101. The recording medium 61 may be a portable recording medium, or may be used to distribute the program or data. The recording medium 61 and the HDD 103 may be referred to as a computer-readable recording medium.

The accelerator card 105 is a hardware accelerator that searches for a solution to a problem represented by the energy function of the Ising model. The accelerator card 105 includes an FPGA 111 and a RAM 112. The FPGA 111 implements a search function in the accelerator card 105. The search function may be implemented by another type of integrated circuit such as a GPU or an ASIC. The RAM 112 holds data used for the search in the FPGA 111, or the solution to the subproblem searched by the FPGA 111.

The hardware accelerator that searches for the solution to an Ising form problem such as the accelerator card 105 may be referred to as an Ising machine, a Boltzmann machine, or the like. As described below, the node 100 may include a plurality of accelerator cards.

The NIC 106 is a communication interface that is connected to the network 60 to communicate with the control apparatus 50 or the nodes 200, 300, and 400 via the network 60. The NIC 106 is connected, for example, to a communication apparatus such as a switch or a router with a cable.

The bus 107 is an internal bus of the node 100. The CPU 101, the RAM 102, the HDD 103, the medium reader 104, the accelerator card 105, and the NIC 106 are coupled to the bus 107. For the bus 107, for example, a Peripheral Component Interconnect Express (PCIe) is used.

The nodes 200, 300, and 400 are also implemented by hardware in the same manner as the node 100. The control apparatus 50 is also implemented by hardware in the same manner as the node 100. The control apparatus 50 may not include hardware corresponding to the accelerator card 105.

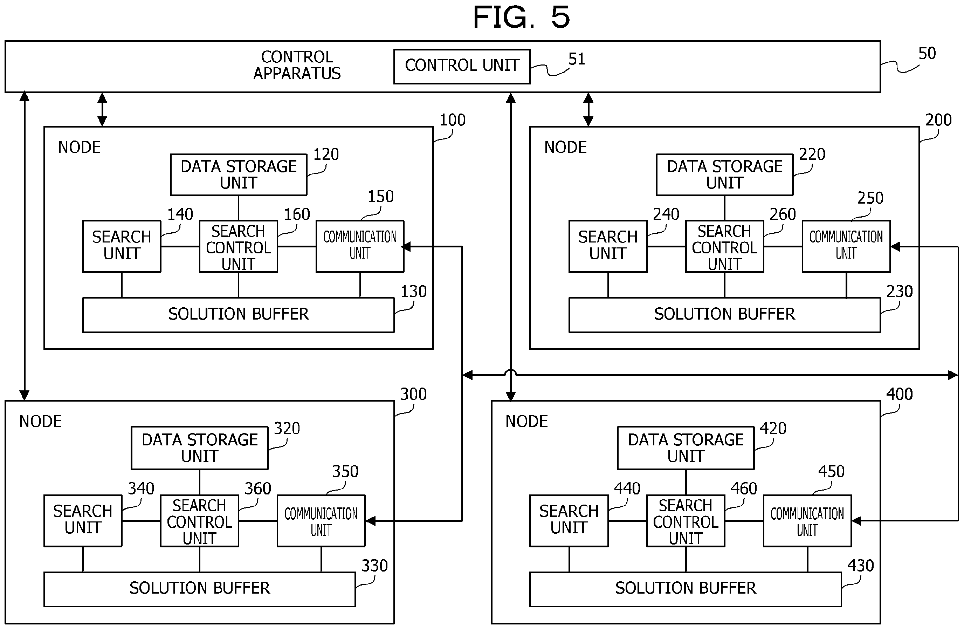

FIG. 5 is a diagram illustrating a function example of the information processing system.

The control apparatus 50 includes a control unit 51. The control unit 51 is implemented, for example, with a CPU of the control apparatus 50 executing a program stored in the RAM of the control apparatus 50.

The control unit 51 accepts an input of problem data on the combinatorial optimization problem, converts the problem data into the Ising form, divides the problem converted into the Ising form into a plurality of subproblems, and allocates the plurality of subproblems to the nodes 100, 200, 300, and 400. Meanwhile, the control unit 51 may accept an input of information on the plurality of subproblems from the outside, and allocate the plurality of subproblems to the nodes 100, 200, 300, and 400.

The control unit 51 acquires solutions from the nodes 100, 200, 300, and 400, or provides a solution to the combinatorial optimization problem based on the acquired solutions, to the user.

The nodes 100, 200, 300, and 400 respectively include data storage units 120, 220, 320, and 420, solution buffers 130, 230, 330, and 430, search units 140, 240, 340, and 440, communication units 150, 250, 350, and 450, and search control units 160, 260, 360, and 460.

Storage regions of RAMs (for example, the RAM 102) of the nodes 100, 200, 300, and 400 are respectively used for the data storage units 120, 220, 320, and 420 and the solution buffers 130, 230, 330, and 430. The search units 140, 240, 340, and 440 respectively are implemented by the accelerator cards of the nodes 100, 200, 300, and 400. The communication units 150, 250, 350, and 450 and the search control units 160, 260, 360, and 460 are respectively implemented with the CPUs of the respective nodes 100, 200, 300, and 400 executing programs stored in the RAMs of the nodes.

The following description is given mainly using the node 100 as an example. The content of the description in the same manner applies to the functions of the nodes 200, 300, and 400 with names in the same manner.

The data storage unit 120 stores data used by the search control unit 160 for executing processing. For example, the data storage unit 120 stores a weighting coefficient between state variables related to a state variable group handled by the node 100. In a case where the number of state variables belonging to the state variable group handled by the node 100 is K, the number of weighting coefficients held in the data storage unit 120 is K×N.

The solution buffer 130 holds a solution obtained by the node 100. The solution buffer 130 holds a solution to the entire problem, for example, the entire solution. The solution held in the solution buffer 130 is updated based on a solution searched by the search unit 140 or a solution received from another node.

The search unit 140 searches for a solution to the subproblem allocated to the node 100.

The search unit 140 searches for the solution of the subproblem by using a search method such as SA, GA, SQA, and tabu search described above. As an example, a case of using the SA or the replica exchange method is considered.

For each state variable handled by the self-node, the search unit 140 calculates the change amount of energy $\Delta E'_i$ by changing a value of one state variable in a state variable group handled by the self-node, and stochastically accepts a change in such a manner that the change with which energy is reduced is prioritized. Meanwhile, the search unit 140 fixes values of state variables belonging to a state variable group handled by the nodes other than the node itself. The change amount of energy $\Delta E'_i$ is represented by Equation (6) described above. As the bias b' in Equation (6), the search unit 140 uses a value obtained by Equation (7). In Equation (7), a weighting coefficient is scaled with the coefficient $\alpha$ ($0 < \alpha < 1$).

When the SA method or the replica exchange method is used, a Metropolis method or a Gibbs method is used to determine a probability of a transition of an Ising model from a certain state to the next state due to a change in certain state variable. For example, the search unit 140 also stochastically allows a change of increasing the value of the energy function E'(x), in accordance with comparison between the change amount of energy and a noise value. The noise value is obtained based on a temperature value or a random number. As the temperature value increases, an amplitude of the noise value increases. As the amplitude of the noise value increases, a state transition with a large increase in energy is more likely to be acceptable.

The search unit 140 repeats such processing until a search end condition for one search for a solution is satisfied, and sets, as the current solution, a set of the value of each state variable handled by the self-node and the value of the fixed state variable when the search end condition is satisfied. For example, whether the search end condition is satisfied is determined based on whether a predetermined unit time elapses, whether the state variable change (bit inversion) test count reaches a predetermined unit count, or the like.

Although not illustrated, the search unit 140 includes a local memory that holds a value of each state variable handled by the self-node and a weighting coefficient related to the each state variable. A storage region such as an SRAM mounted to the accelerator card 105 is used as the local memory. For example, the RAM 112 may be the SRAM providing the local memory.

The communication unit 150 transmits a solution held in the solution buffer 130 to another node, and receives the solution from the other node.

The search control unit 160 controls the search unit 140 and the communication unit 150. The search control unit 160 may cause the search unit 140 and the communication unit 150 to asynchronously operate. The search control unit 160 updates the solution held in the solution buffer 130 based on the solution acquired by the search unit 140. The search control unit 160 instructs the communication unit 150 to transmit the solution held in the solution buffer 130. The search control unit 160 updates the solution held in the solution buffer 130, based on the solution received by the communication unit 150 from the other node. For example, the search control unit 160 initializes solution information in the search unit 140, based on the solution held in the solution buffer 130. At this time, the search control unit 160 calculates the bias b' based on Equation (7), and sets the bias b' in the search unit 140.

For example, the search control unit 160 scales a weighting coefficient related to a state variable group that is not allocated to the self-node with the coefficient a. Thus, the search control unit 160 reduces an influence of the weighting coefficient on the change amount of energy. Meanwhile, when obtaining the energy of the solution, the search control unit 160 uses the bias b' represented by Equation (3), which is not scaled with a.

The coefficient α is input to the nodes 100, 200, 300, and 400 in advance by the control apparatus 50. As an example, the control apparatus 50 inputs the coefficient α input by the user to the nodes 100, 200, 300, and 400. Alternatively, for example, the control apparatus 50 may determine the coefficient α such that the maximum value of the possible values of all the weighting coefficients after the scaling is approximately the same as the maximum value of possible values of cost values included in the weighting coefficients before the scaling, and may input the coefficient α to the nodes 100, 200, 300, and 400.

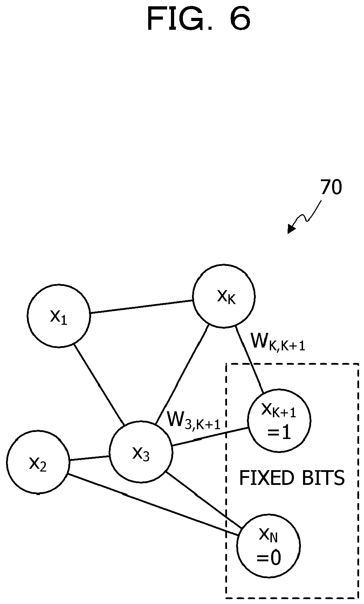

FIG. 6 is a diagram illustrating an example of fixed bits in a subproblem.

A graph 70 illustrates an example of a relationship among state variables $x_1$, $x_2$, $x_3$, $x_K$, $x_{K+1}$, and $x_N$. In the node 100, the $x_{K+1}$ included in a state variable group handled by the node 200 and the $x_N$ included in a state variable group handled by the node 400 are set as fixed bits, for example, state variables having fixed values. In the example of the graph 70, $x_{K+1} = 1$ and $x_N = 0$.

By using the value of the fixed bit and a weighting coefficient between a state variable included in the state variable group handled by the search unit 140 and the fixed bit, the search control unit 160 may determine the bias $b'_i$ with Equation (3) or Equation (7). For example, a weighting coefficient $W_{K,K+1}$ between $x_K$ and $x_{K+1}$ is used for calculating $b'_K$, and a weighting coefficient $W_{3,K+1}$ between $x_3$ and $x_{K+1}$ is used for calculating $b'_3$.

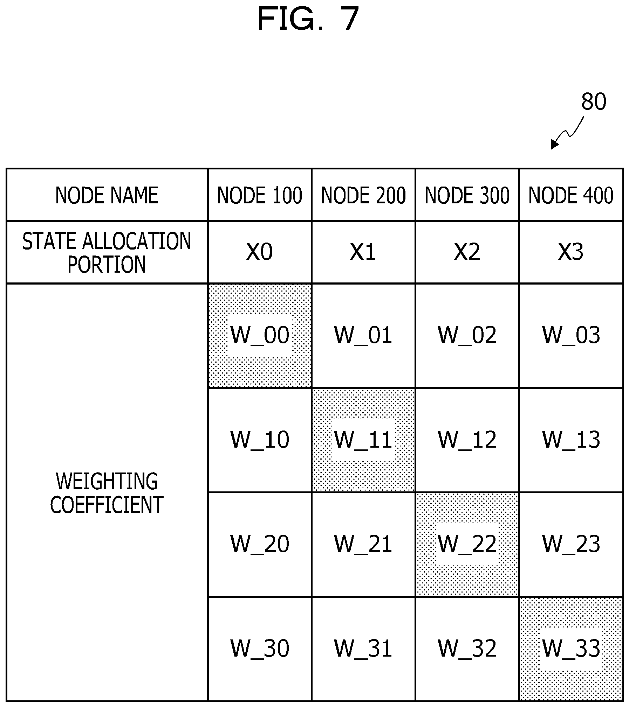

FIG. 7 is a diagram illustrating an example of information held by each node.

A table 80 illustrates an example of information held by each of the nodes 100, 200, 300, and 400.

The table 80 includes items of a node name, a state allocation portion, and a weighting coefficient. The item "node name" includes node names. The item "state allocation portion" includes a state variable group handled by the corresponding node. This state indicates a state of the Ising model represented by values of all state variables used for representing the entire problem.

As an example, K state variables are allocated to each of the nodes 100, 200, 300, and 400. For example, as described above, the state variable group X0 is allocated to the node 100. The state variable group X0 includes state variables $x_1$ to $x_K$. The state variable group X1 is allocated to the node 200. The state variable group X1 includes state variables $x_{K+1}$ to $x_{2K}$. The state variable group X2 is allocated to the node 300. The state variable group X2 includes state variables $x_{2K+1}$ to $x_{3K}$. The state variable group X3 is allocated to the node 400. The state variable group X3 includes state variables $x_{3K+1}$ to $x_N$. The values of the state variable groups X0, X1, X2, and X3 are held in the local memories of the respective search units 140, 240, 340, and 440.

Meanwhile, different numbers of state variables may be allocated to the respective nodes 100, 200, 300, and 400, or a part of a state variable group allocated to a certain node and a part of a state variable group allocated to another node may overlap with each other.

The item "weighting coefficient" includes weighting coefficients held by each node. For example, the node 100 holds the weighting coefficient groups W_00, W_10, W_20, and W_30. A numerical value after the underscore "_" of the sign indicating the weighting coefficient indicates the following index range related to the state variable. "0" is 1 to K. "1" is K+1 to 2K. "2" is 2K+1 to 3K. "3" is 3K+1 to N. For example, W_00 represents a part $\{W_{ij}\}$ ($1 \leq i \leq K$ and $1 \leq j \leq K$) of the entire weighting coefficient W.

The node 200 holds the weighting coefficient groups W_01, W_11, W_21, and W_31. The node 300 holds the weighting coefficient groups W_02, W_12, W_22, and W_32. The node 400 holds the weighting coefficient groups W_03, W_13, W_23, and W_33.

The weighting coefficient groups W_00, W_11, W_22, and W_33 are held in the local memories of the respective search units 140, 240, 340, and 440.

The data storage unit 120 holds the weighting coefficient groups W_00, W_10, W_20, and W_30. The data storage unit 220 holds the weighting coefficient groups W_01, W_11, W_21, and W_31. The data storage unit 320 holds the weighting coefficient groups W_02, W_12, W_22, and W_32. The data storage unit 420 holds the weighting coefficient groups W_03, W_13, W_23, and W_33.

In this manner, each of the nodes 100, 200, 300, and 400 may hold only the weighting coefficient group corresponding to the state variable group allocated to the self-node. Therefore, it is possible to reduce a memory capacity desirable in the nodes 100, 200, 300, and 400 for holding the weighting coefficient group.

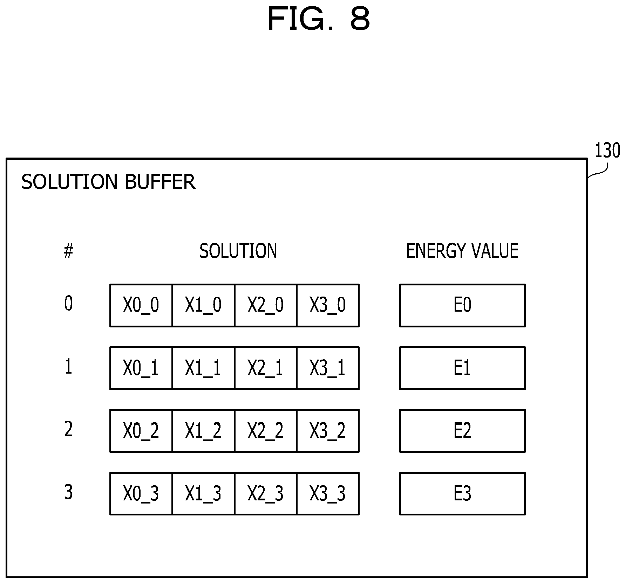

FIG. 8 is a diagram illustrating an example of information held in a solution buffer.

The solution buffer 130 holds solutions and energy values. "#" illustrated for convenience indicates an identification number of a record including the solution and the energy value.

The record with an identification number "0" includes a solution "X0_0, X1_0, X2_0, X3_0" and an energy value "E0". In the same manner as the first embodiment, a set of values of respective state variables in a certain state variable group is identified with a sign such as X0 representing a state variable group, such as "_1", combined with an underscore "_" and a number such as "X0_0" and "X0_1", for example.

In an example illustrated, the solution buffer 130 stores records with identification numbers "1", "2", and "3", in addition to the record with the identification number "0".

The number of sets of solutions and energy values stored in the solution buffer 130 is determined in advance. In the example of the second embodiment, four sets of solutions and energy values are assumed to be stored in each of the solution buffers 130, 230, 330, and 430. The number of sets of solutions and energy values stored in each of the solution buffers 130, 230, 330, and 430 may be a number other than four.

When acquiring a solution searched by the search unit 140 for the state variable group X0, the search control unit 160 calculates energy for a solution candidate as a result of reflecting the solution on a solution held in the solution buffer 130. At this time, the data storage unit 120 holds only the weighting coefficient group related to the state variable combined with each state variable in the state variable group X0 allocated to the node 100. Therefore, the search control unit 160 calculates energy when changing the part of the state variable group X0 to a new value in the solution held in the solution buffer 130, as follows. The energy may be calculated in the same manner for other state variable groups allocated to other nodes.

The entirety of the state variables is denoted by Sn. Energy corresponding to Sn is denoted by En.

Sn is represented as Sn = Sa & So. Sa represents a state variable group handled by the self-node, and corresponds to the state variable group X0, in a case of the node 100. So is a state variable group handled by another node, and corresponds to the state variable groups X1, X2, and X3 of the fixed portion, in a case of the node 100. The ampersand symbol "&" indicates a combination between the state variable group on the right side of & and the state variable group on the left side of &.

A case is considered where a node obtains updated energy E' for energy E, in a case where the state variable group handled by the self-node is updated from Sa to Sa'.

For example, the node 100 obtains a value of each state variable in the state variable group Sa for the solution held in the solution buffer 130 and the energy E before the update. An energy change $\Delta E(E'-E)$ with respect to the state variable groups Sa to Sa' may be calculated by the self-node. For example, the node 100 may add an additional bias $\Delta b$ calculated from So and a weighting coefficient held by the node 100 to the original bias b, and calculate the energy change $\Delta E(E'-E)$ from the weighting coefficient, the bias $(b+\Delta b)$, and a change (Sa'-Sa) of the state variable of the node 100.

Accordingly, the energy E' after the update is $E' = E+\Delta E$, and may be calculated only by the self-node. The weighting coefficient used for calculating $\Delta E(E'-E)$ is a weighting coefficient that is not scaled with the coefficient a.

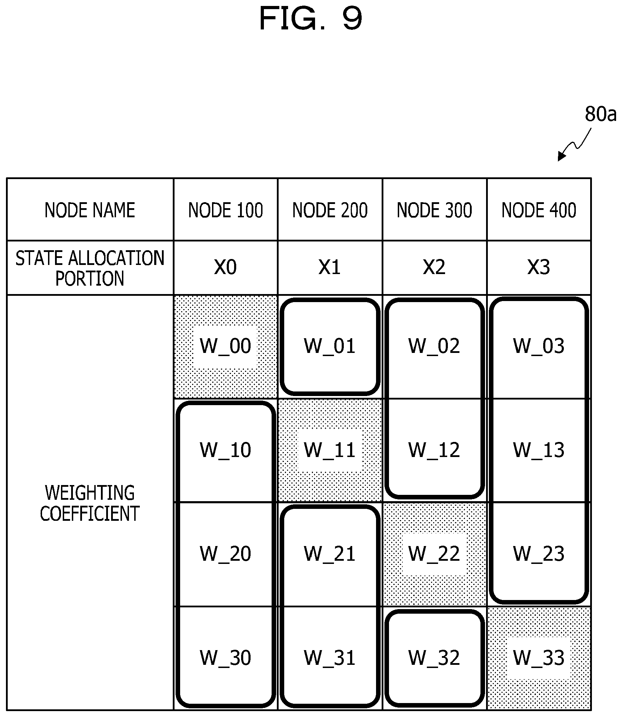

FIG. 9 is a diagram illustrating an example of weighting coefficients related to state variables in another region.

A table 80a illustrates an example of information held by each of the nodes 100, 200, 300, and 400. The weighting coefficient groups surrounded by thick frame lines in the table 80a, such as the weighting coefficient groups W_10, W_20, and W_30 for the node 100, corresponds to weighting coefficients related to state variables in other regions for the node 100, for example.

A state variable allocated to the node 100, for example, a state variable of its own region in the node 100 is a state variable belonging to the state variable group X0. State variables of other regions in the node 100 are state variables belonging to the state variable groups X1, X2, and X3. Accordingly, the weighting coefficients related to the state variables of the other regions in the node 100 are the weighting coefficients belonging to the weighting coefficient groups W_10, W_20, and W_30. In the node 100, the weighting coefficients belonging to the weighting coefficient groups W_10, W_20, and W_30 are targeted for scaling with the coefficient a.

A state variable of the own region in the node 200 is a state variable belonging to the state variable group X1. State variables of other regions for the node 200 are state variables belonging to the state variable groups X0, X2, and X3. Weighting coefficients related to the state variables of the other regions in the node 200 are weighting coefficients belonging to the weighting coefficient groups W_01, W_21, and W_31. In the node 200, the weighting coefficients belonging to the weighting coefficient groups W_01, W_21, and W_31 are targeted for scaling with the coefficient $\alpha$.

A state variable of the own region in the node 300 is a state variable belonging to the state variable group X2. State variables of other regions for the node 300 are state variables belonging to the state variable groups X0, X1, and X3. Weighting coefficients related to the state variables of the other regions in the node 300 are weighting coefficients belonging to the weighting coefficient groups W_02, W_12, and W_32. In the node 300, the weighting coefficients belonging to the weighting coefficient groups W_02, W_12, and W_32 are targeted for scaling with the coefficient $\alpha$.

A state variable of the own region in the node 400 is a state variable belonging to the state variable group X3. State variables of other regions for the node 400 are state variables belonging to the state variable groups X0, X1, and X2. Weighting coefficients related to the state variables of the other regions in the node 400 are weighting coefficients belonging to the weighting coefficient groups W_03, W_13, and W_23. In the node 400, the weighting coefficients belonging to the weighting coefficient groups W_03, W_13, and W_23 are targeted for scaling with the coefficient a.

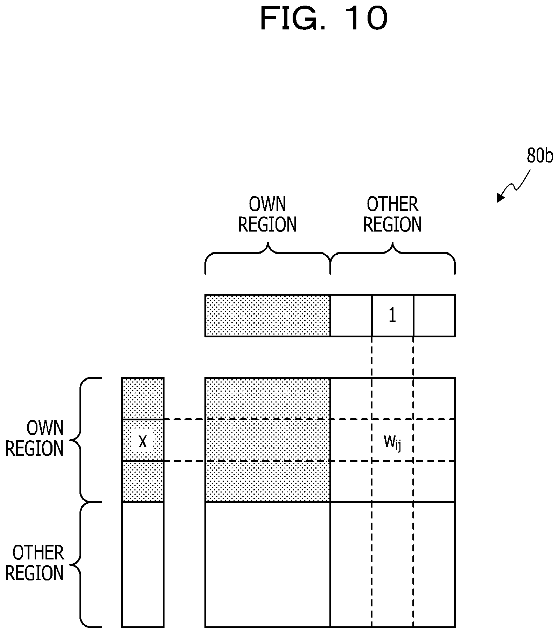

FIG. 10 is a diagram illustrating an example of a state variable of an own region influenced by a state variable of another region.

A table 80b represents a relationship between a state variable of the own region and state variables of other regions for the node 100. A state variable x is one state variable of the own region in the node 100. The weighting coefficient $w_{ij}$ is a weighting coefficient for a pair of a certain state variable in another region and the state variable x in the own region. Meanwhile, $w_{ij}$ may be considered to be a penalty value included in the weighting coefficient for the pair. An absolute value $|w_{ij}|$ of $w_{ij}$ is relatively a large value.

In a case where Equation (3) is used for the calculation of a bias, when the state variable x of the own region is changed from 0 to 1 when the state variable of the other region is 1, the increase amount of energy based on Equation (6) is relatively large due to an influence of $w_{ij}$. A value of the state variable in the other region may be updated at a timing of solution sharing with another node, but is fixed as long as the value is not updated at the timing. Therefore, it is difficult to change the state variable x of the own region from 0 to 1 in the solution search by the search unit 140.

Accordingly, the search control unit 160 scales the weighting coefficient $w_{ij}$ with the coefficient $\alpha$ as represented by Equation (7).

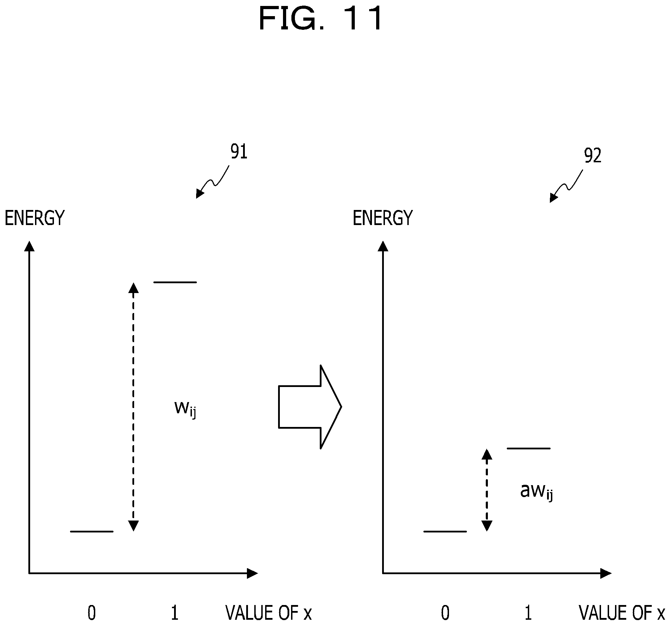

FIG. 11 is a diagram illustrating an example of scaling of weighting coefficients.

A graph 91 illustrates an influence of $w_{ij}$ on an increase amount of energy in a case where scaling of the weighting coefficient $w_{ij}$ is not performed. A graph 92 illustrates an influence of $\alpha w_{ij}$ on the increase amount of energy in a case where the weighting coefficient $w_{ij}$ is scaled. Horizontal axes of the graphs 91 and 92 indicate possible values that the state variable x of the own region illustrated in FIG. 10. The possible value of the state variable x is 0 or 1. Vertical axes of the graphs 91 and 92 indicate energy. A value of a state variable in another region corresponding to $w_{ij}$ is assumed to be 1.

As illustrated in the graph 92, by scaling $w_{ij}$ with $\alpha$, it is possible to suppress an increase amount of energy caused by the state variable of the other region fixed to 1 to be low when the state variable x of the own region is set to 1. Therefore, by scaling $w_{ij}$ with $\alpha$, it is possible to promote a state transition that changes the state variable x of the own region from 0 to 1. In the same manner, in a case where a penalty value included in $w_{ij}$ is scaled with $\alpha$, it is possible to suppress the increase amount of energy to be low.

For example, the transition probability may be increased for a transition in which a penalty violation occurs since the state variable that is not handled by the self-node is 1, but a cost itself is significantly reduced. As a result, a search space in the self-node may be expanded, and a variety of a solution is increased, so that the possibility of obtaining an appropriate solution, for example, a solution with lower energy is increased.

A processing procedure of the information processing system 2 is as follows. The control apparatus 50 first allocates subproblems to each of the nodes 100, 200, 300, and 400. The nodes 100, 200, 300, and 400 executes the following procedure. Although the description is given with the node 100 mainly used as an example, the nodes 200, 300, and 400 also execute the procedure in the same manner as the node 100.

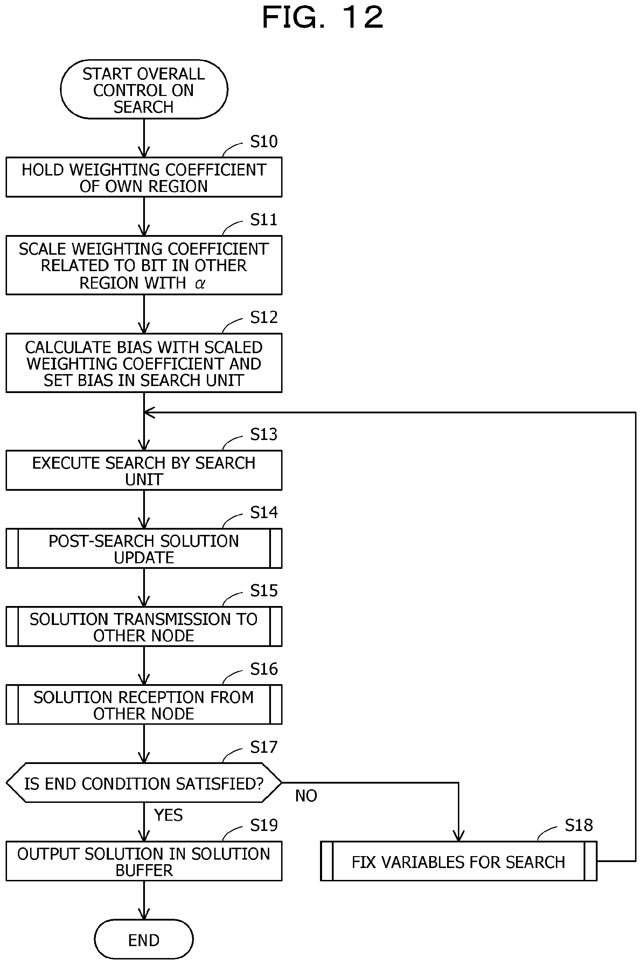

FIG. 12 is a flowchart illustrating an example of overall control on a search.

(S10) The search control unit 160 acquires a weighting coefficient of the own region from the control apparatus 50, and holds the weighting coefficient in the data storage unit 120. For example, weighting coefficients of the own region in the node 100 are weighting coefficients belonging to the weighting coefficient groups W_00, W_10, W_20, and W_30. The search control unit 160 sets the weighting coefficient group W_00 in the search unit 140.

(S11) The search control unit 160 scales a weighting coefficient related to a bit (state variable) in another region with a. In the node 100, the weighting coefficients to be scaled are the weighting coefficients belonging to the weighting coefficient groups W_10, W_20, and W_30. Alternatively, the search control unit 160 may multiply the weighting coefficient by $\alpha$ by performing a shift operation on a bit string representing the weighting coefficient.

(S12) By using an initial solution and the scaled weighting coefficient, the search control unit 160 calculates the bias b' based on Equation (7), and sets the calculated bias b' in the search unit 140. The search control unit 160 sets the initial solution in the search unit 140. The initial solution in step S12 is input from the control apparatus 50, for example.

(S13) The search unit 140 executes a search for a solution to a subproblem. The search unit 140 obtains the solution by the search. The search control unit 160 acquires the solution obtained by the search unit 140. In the search, the search unit 140 changes only values of state variables belonging to the state variable group X0 allocated to the self-node. For determining the state variable of which the value is to be changed, the search unit 140 uses the Metropolis method or the Gibbs method. For example, when selecting the state variable of which the value is to be changed, the search unit 140 stochastically accepts a change in such a manner that the change with which energy is reduced is prioritized, based on the bias b' set in step S12 and the change amount of energy calculated by Equation (6). At this time, the search unit 140 also stochastically allows a change with which energy is increased. As the change amount of energy at the time of changing to the state of the next transition destination candidate is smaller, the search unit 140 performs control such that the acceptance probability is higher.

(S14) The search control unit 160 executes a solution update after the search. Details of the processing of the solution update after the search will be described below.

(S15) The search control unit 160 executes solution transmission to another node via the communication unit 150. Details of the processing of the solution transmission to the other node will be described below.

(S16) The search control unit 160 executes solution reception from another node via the communication unit 150. Details of processing of the solution reception from the other node will be described below.

(S17) The search control unit 160 determines whether or not an end condition for overall control on the search is satisfied. In a case where the end condition is not satisfied, the search control unit 160 advances the processing to step S18. In a case where the end condition is satisfied, the search control unit 160 advances the processing to step S19. Examples of the end condition include elapse of a predetermined time from a start of the processing for overall control, execution in step S13 described above for a predetermined number of times, or the like.

(S18) The search control unit 160 executes processing of fixing a variable during the search. The processing of fixing the variable during the search includes initialization of solution information. Details of the processing of fixing the variable during the search will be described below. The search control unit 160 then advances the processing to step S13.

(S19) The search control unit 160 outputs a solution held in the solution buffer 130 to the control apparatus 50. The search control unit 160 then ends the processing for overall control on the search.

Step S13, S14, S16 may be executed synchronously in each node. The solution transmission to the other node in step S15 and the solution reception from the other node in step S16 may not be executed after step S14 as described above, and may be executed at any timing, such as at a predetermined interval, asynchronous with the search by the search unit 140.

For example, the interval of the solution transmission to the other node may be the same as or longer than an interval at which the solution in the solution buffer 130 is updated based on the solution searched by the search unit 140. The solution reception from the other node may be executed when the other node performs push transmission of the solution. In this manner, the search by the self-node, the solution transmission to the other node, and the solution reception from the other node may each be executed as independent processing. The solution transmission to the other node in step S15 and the solution reception from the other node in step S16 may be executed in any order. For example, steps S15 and S16 may be executed in the opposite order. One node may successively receive solutions from a plurality of other nodes.

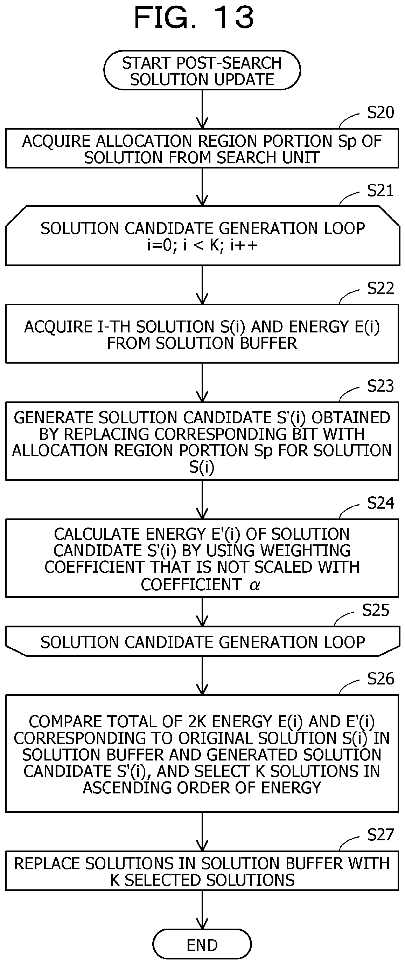

FIG. 13 is a flowchart illustrating a first example of a solution update after a search.

The solution update after the search corresponds to step S14.

(S20) The search control unit 160 acquires an allocation region portion Sp of the searched solution from the search unit 140. The allocation region portion Sp is a set of values of the state variable group X0 allocated to the self-node, among the searched solutions.

(S21) The search control unit 160 executes a solution candidate generation loop. In the procedure illustrated in FIG. 13, i represents the number of times the loop is executed. An initial value of i is 0. K represents the number of solutions stored in the solution buffer 130. Every time a single loop is executed, i is incremented. The following steps S22 to S24 are repeatedly executed as long as i < K holds.

(S22) The search control unit 160 acquires an i-th solution S(i) and energy E(i) from the solution buffer 130.

(S23) The search control unit 160 generates a solution candidate S'(i) by replacing, with the allocation region portion Sp, a corresponding bit, for example, a part of the solution S(i) corresponding to the state variable belonging to the state variable group X0 handled by the node 100.

(S24) By using a weighting coefficient that is not scaled with the coefficient $\alpha$, the search control unit 160 calculates the energy E'(i) of the solution candidate S'(i).

(S25) Every time a single loop is executed, the search control unit 160 increments i. When i reaches K, the search control unit 160 ends the solution candidate generation loop, and advances the processing to step S26.

(S26) The search control unit 160 performs comparison among a total of 2K energy E(i) and E'(i) corresponding to the original solution S(i) in the solution buffer 130 and the generated solution candidate S'(i), and selects K solutions in ascending order of energy. The K solutions to be selected may include the solution candidate S'(i).

(S27) The search control unit 160 replaces the solutions in the solution buffer 130 with the K solutions selected in step S26. The search control unit 160 then ends the processing of solution update after the search.

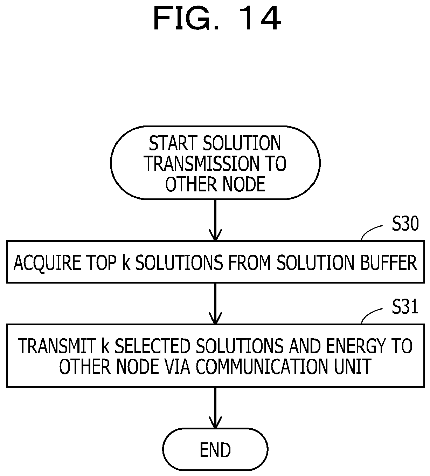

FIG. 14 is a flowchart illustrating an example of solution transmission to another node.

The solution transmission to the other node corresponds to step S15.

(S30) The search control unit 160 acquires the top k solutions, for example, k solutions in ascending order of energy from the solution buffer 130. In the procedure in FIG. 14, k is an integer equal to or larger than 1 and smaller than the number of solutions held in the solution buffer 130. For example, the value of k is determined in advance from values of approximately 1 to 3.

(S31) The search control unit 160 transmits the k selected solutions and energy corresponding to the solutions to the other node via the communication unit 150. Transmission destinations of the solutions are all nodes other than the self-node. The search control unit 160 then ends the processing of solution transmission to the other node.

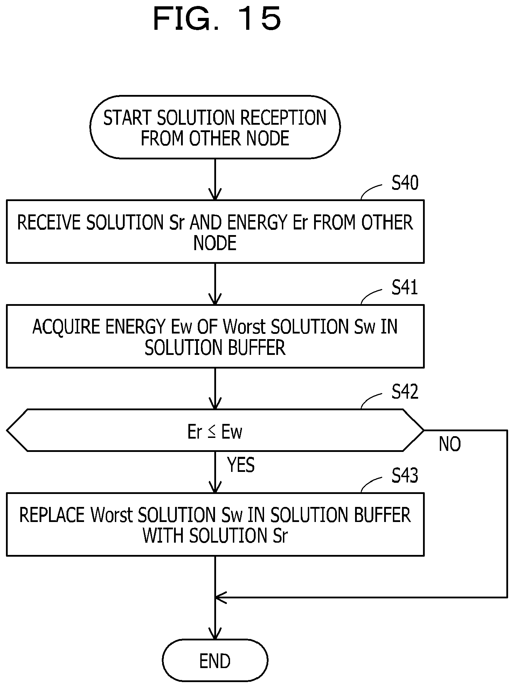

FIG. 15 is a flowchart illustrating an example of solution reception from another node.

The solution reception from the other node corresponds to step S16.

(S40) The communication unit 150 receives a solution Sr and energy Er from the other node. For example, the search control unit 160 acquires the solution Sr and the energy Er received by the communication unit 150.

(S41) The search control unit 160 acquires energy Ew corresponding to a worst solution Sw, for example, the solution Sw with the maximum energy in the solution buffer 130.

(S42) The search control unit 160 determines whether or not Er ≤ Ew holds. In a case where Er ≤ Ew holds, the search control unit 160 advances the processing to step S43. In a case where Er > Ew holds, the search control unit 160 discards the solution Sr received from the other node, and ends the processing of solution reception from the other node.

(S43) The search control unit 160 replaces the worst solution Sw in the solution buffer 130 with the solution Sr. The search control unit 160 discards the worst solution Sw. The search control unit 160 then ends the processing of solution reception from the other node.

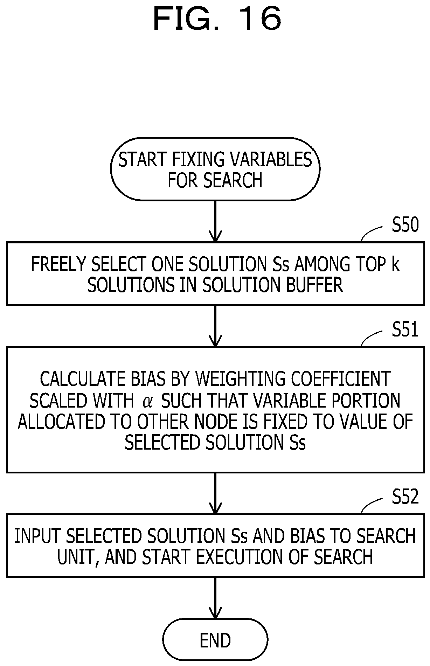

FIG. 16 is a flowchart illustrating an example of fixing variables during a search.

The fixing of the variables during the search corresponds to step S18.

(S50) The search control unit 160 freely selects one solution Ss, among top k solutions in the solution buffer 130, for example, k solutions in ascending order of energy. In the procedure in FIG. 16, k is an integer equal to or larger than 1 and smaller than the number of solutions held in the solution buffer 130.

(S51) The search control unit 160 calculates a bias by using a weighting coefficient scaled with α so as to fix a variable portion allocated to another node to a value of the selected solution Ss. The bias corresponds to b' in Equation (7).

(S52) The search control unit 160 inputs the selected solution Ss and the bias b' of Equation (7) to the search unit 140, and causes the search unit 140 to execute a search. For example, a start state of the search by the search unit 140, for example, an initial solution for the next search is the solution Ss set in the search unit 140 at the stage in step S52. The search control unit 160 then ends the processing of fixing the variables for the search.

In this manner, by evaluating the solution candidates in which the newly searched solution is reflected for all the solutions in the solution buffer of each node by the nodes 100, 200, 300, and 400, the search result is easily reflected early for many appropriate solutions.

With the above-described example, the solution candidate is generated by replacing the corresponding portion among the solutions in the solution buffer of the self-node with the allocation region portion of the self-node among the solutions searched by the respective nodes, and the solution in the solution buffer is replaced with the solution candidate. Meanwhile, another method may be considered for updating the solution in the solution buffer.

For example, the nodes 100, 200, 300, and 400 may use the solution obtained by each search unit as a solution candidate, and may update the solution in the solution buffer of the self-node. For obtaining energy of the solution candidate, for example, the search control unit 160 may hold a solution used for fixing the variables during the search and energy of the solution in the data storage unit 120. For example, the search control unit 160 compares the energy corresponding to the solution candidate with the energy corresponding to the solutions held in the solution buffer 130, and replaces the worst solution with the solution candidate when the energy corresponding to the solution candidate is larger than the energy corresponding to the worst solution held in the solution buffer 130. Next, an example of a procedure for updating the solutions in the solution buffers in this manner will be described.

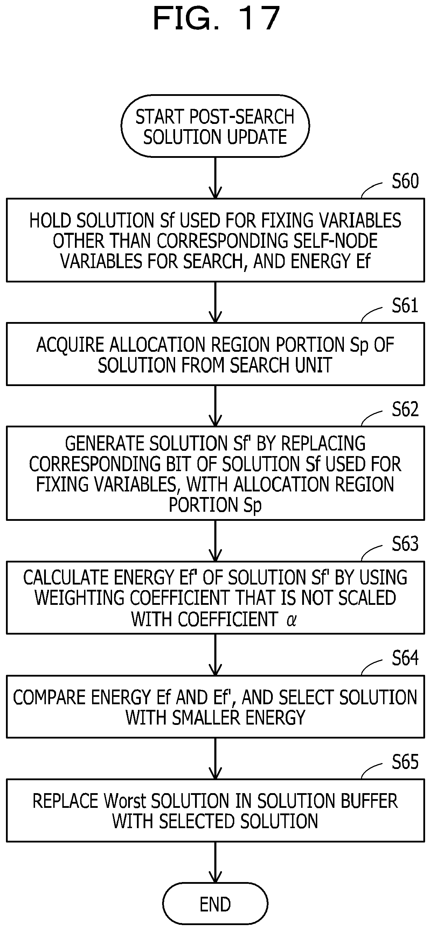

FIG. 17 is a flowchart illustrating a second example of a solution update after a search.

The solution update after the search corresponds to step S14. The procedure illustrated in FIG. 17 is executed instead of the procedure of FIG. 13.

(S60) The search control unit 160 causes the data storage unit 120 to hold a solution Sf used for fixing variables other than self-node variables for the search, and energy Ef corresponding to the solution Sf. The self-node variables are state variables included in the state variable group handled by the node 100.

(S61) The search control unit 160 acquires the allocation region portion Sp of the searched solution from the search unit 140.

(S62) The search control unit 160 generates a solution Sf' by replacing a corresponding bit of the solution Sf used for fixing the variables, with the allocation region portion Sp. The solution Sf' is an entire solution newly searched by the node 100.

(S63) By using a weighting coefficient that is not scaled with the coefficient α, the search control unit 160 calculates the energy Ef' of the solution Sf'.

(S64) The search control unit 160 compares the energy Ef and Ef' with each other, and selects a solution corresponding to the smaller one of the energy Ef and Ef.

(S65) The search control unit 160 replaces the worst solution in the solution buffer 130 with the solution selected in step S64. The search control unit 160 then ends the processing of solution update after the search.

For example, the node 100 may hold cost values and penalty values corresponding to the weighting coefficient groups W_00, W_10, W_20, and W_30 in the data storage unit 120. In this case, the search control unit 160 executes the scaling in steps S11 and S51 for the penalty value. By a linear combination of the cost value and the penalty value after the scaling, the search control unit 160 obtains a weighting coefficient group to be used for the search by the search unit 140, calculates the bias in step S51 by the weighting coefficient group, and sets the bias in the search unit 140. At this time, the search control unit 160 may calculate the bias by Equation (3) by using a weighting coefficient obtained from a result obtained by multiplying the penalty value by a. For example, the search unit 140 may use the bias to calculate the change amount of energy. In the same manner as the node 100, the penalty values of the node 200, 300, and 400 may be scaled with the coefficient a.

In the overall control of the search, the nodes 100, 200, 300, and 400 may perform the solution search by using a bias obtained based on a weighting coefficient or a penalty value which is not scaled with the coefficient $\alpha$ in the middle of the search. For example, in the repetition cycle in steps S13 to S18, the search control unit of each node calculates the bias by using the weighting coefficient scaled with the coefficient $\alpha$ in step S51 for the initial predetermined period. Meanwhile, in the subsequent period, the search control unit of each node may calculate a bias by using a weighting coefficient that is not scaled with the coefficient $\alpha$ in step S51, and may set the bias in the search unit of each node. For example, it is considered that there is a large influence due to the fact that the state variables handled by other nodes are fixed and the variety of solutions may not be secured in an initial stage of optimization, and by scaling the weighting coefficient or the penalty value in the initial stage, it is possible to increase a possibility that an appropriate solution may be reached in a certain time.

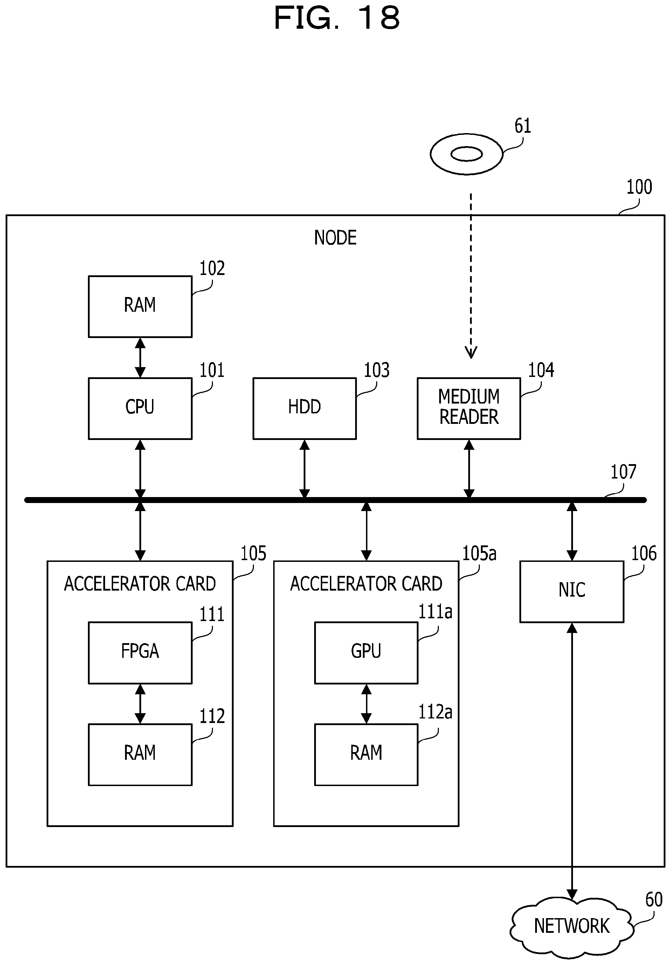

FIG. 18 is a diagram illustrating another hardware example of the node.

For example, the node 100 may further include an accelerator card 105a, in addition to the hardware illustrated in FIG. 4. In the same manner as the accelerator card 105, the accelerator card 105a is a hardware accelerator that searches for a solution to a problem represented by the energy function of the Ising model.

The accelerator card 105a includes a GPU 111a and a RAM 112a. The GPU 111a implements a search function in the accelerator card 105a. The search function may be implemented by another type of integrated circuit such as an FPGA or an ASIC. The RAM 112a holds data used for the search by the GPU 111a and a solution to a subproblem searched by the GPU 111a.

The accelerator card 105a may use the same search method as the method used by the accelerator card 105 or may use a search method different from the method used by the accelerator card 105. For example, the accelerator card 105 may use SA, whereas the accelerator card 105a may use tabu search. The node 100 may include three or more accelerator cards.

By one node including two or more accelerator cards, functions of two or more search units may be implemented in the node. In this case, one node may handle two or more subproblems.

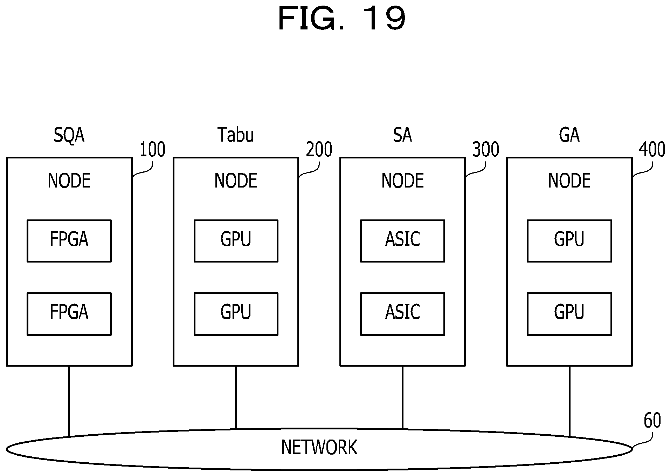

FIG. 19 is a diagram illustrating an example of an information processing system using a plurality of search methods.

For example, the node 100 uses SQA. The node 200 uses tabu search. The node 300 uses SA. The node 400 uses GA. In this manner, the nodes 100, 200, 300, 400, and ... may use different search methods from each other. Alternatively, at least two nodes may use the same search method such that at least two of the nodes 100, 200, 300, 400, and ... may use SA and the other node may use SQA or tabu search. All of the nodes 100, 200, 300, 400, and ... may use the same search method.

As illustrated, the search methods may be different for the respective nodes, and a plurality of accelerators using a plurality of search methods may be mixed in one node. As described above, the accelerator is implemented by an FPGA, a GPU, an ASIC, or the like. As illustrated in the second embodiment, at least two types of integrated circuits among the FPGA, the GPU, the ASIC, and the like may be mixed in one node.

In the information processing system 2, each of a plurality of nodes shares the best solution among a plurality of solutions obtained by each node, with other nodes. Based on the shared solution, a value of each state variable in a state variable group fixed in the next search by each node is determined. An even better solution is estimated to be likely to be in the proximity of a better solution. Therefore, by sharing an appropriate solution found in each node with other nodes and determining a value of each state variable of a state variable group to be fixed based on the shared solution, the search space is narrowed to the proximity of the better solution, and a possibility of obtaining the even better solution is increased.

In this manner, since an appropriate solution found by a certain node is shared with another node, a plurality of nodes may cooperate to improve the solutions. Meanwhile, in each node, since a state variable that does not belong to the state variable group allocated to the self-node is updated in accordance with solution sharing by communicating with another node, an update frequency is decreased. Therefore, when the state transition may not be performed only by the change in state variable group allocated to the self-node, the update of the value of the state variable of which the value is fixed, which does not belong to the state variable group, is waited for, and the solution finding speed decreases.

For example, in a case where the value of the state variable in another region is fixed to 1, the state variable that is changeable in the state variable group allocated to the self-node may be limited due to the influence of the penalty value for the pair of the state variable in the other region and the state variable in the own region.

Accordingly, the search control unit 160 may reduce the influence of the weighting coefficient related to the state variable in the other region on the change amount of energy by scaling the weighting coefficient or the penalty value related to the state variable in the other region with the coefficient a. Thus, even in a case where the state variable allocated to the other node other than the node 100 is fixed to 1, it is possible to suppress an increase amount of energy due to a value of the state variable.

Therefore, since the state variable handled by another node is fixed to 1, even in a case where it is normally difficult to change the state variable handled by the self-node to 1 due to the influence of the penalty value, it is easy to change the state variable to 1. As a result, a transition of the state variable in the node 100 is promoted, and a possibility that an appropriate solution may be reached is increased. In the same manner as the node 100, in the nodes 200, 300, and 400, the possibility of reaching an appropriate solution is increased. Accordingly, the possibility that a better solution may be reached is increased in the entire nodes 100, 200, 300, and 400. Thus, the information processing system 2 may improve the solution finding performance.

The information processing system 2 may asynchronously search for a solution by using each node, or may search for a solution by using different search methods by each node. Therefore, in the information processing system 2, it is possible to easily add a node to a relatively large-scale problem, and to realize a system having excellent extensibility.

The information processing system 2 described above executes, for example, the following processing. The following processing may also be executed by the information processing system 1.

The information processing system 2 searches for a solution to a problem represented by an energy function including a plurality of state variables. The information processing system 2 includes a plurality of nodes. The nodes 100, 200, 300, and 400 are examples of the plurality of nodes.

Each of the plurality of nodes searches for a solution by changing a value of a state variable belonging to a state variable group allocated corresponding to a subproblem allocated to the self-node among a plurality of subproblems generated by dividing the problem and each including a state variable group having some state variables among the plurality of state variables. Each of the plurality of nodes performs the following processing in the search. Each of the plurality of nodes holds a first weighting coefficient indicating a weight for a first pair of two state variables allocated to the self-node, and holds a second weighting coefficient indicating a weight for a second pair of the state variable allocated to the self-node and a state variable allocated to another node, or a penalty value used for calculation of the second weighting coefficient. Each of the plurality of nodes multiplies the second weighting coefficient or the penalty value by the coefficient $\alpha$ which is larger than 0 and smaller than 1. Each of the plurality of nodes calculates, for each state variable belonging to the state variable group allocated to the self-node, a change amount of a value of an energy function caused by changing a value of the state variable, based on a third weighting coefficient which is a result of multiplying the second weighting coefficient by the coefficient $\alpha$, or a fourth weighting coefficient for the second pair calculated by using a result of multiplying the penalty value by the coefficient $\alpha$, and the first weighting coefficient. Each of the plurality of nodes determines a state variable of which the value is to be changed, based on the change amount calculated for each state variable allocated to the self-node.

Thus, the information processing system 2 may relieve the restriction on the search space in each of the plurality of nodes, and may improve the solution finding performance. The scaling the penalty value with the coefficient $\alpha$ may suppress an influence of the coefficient $\alpha$ on the cost value, rather than scaling the weighting coefficient with the coefficient $\alpha$.

Each of the plurality of nodes calculates a value of an energy function corresponding to a solution specified by the self-node by using the second weighting coefficient instead of the third weighting coefficient or the fourth weighting coefficient, and holds a plurality of solutions in accordance with the calculated value of the energy function. Each of the plurality of nodes transmits at least one solution among the plurality of solutions held by the self-node to another node, receives a solution transmitted by the other node, and updates at least a part of the plurality of solutions held by the self-node based on the solution received from the other node.

Thus, the information processing system 2 may collectively improve the solution by the plurality of nodes, and may improve the solution finding performance for the relatively large-scale problem.

Each of the plurality of nodes may appropriately obtain the value of the energy function corresponding to the solution by using the second weighting coefficient instead of the third weighting coefficient or the fourth weighting coefficient when obtaining the value of the energy function corresponding to the solution specified by the self-node. Based on the value of the energy function, it is possible to appropriately select whether to hold or discard the solution obtained by the self-node.

Each of the plurality of nodes replaces one of the plurality of solutions held by the self-node with a first solution based on values of energy functions corresponding to the first solution newly specified by the self-node and each of the plurality of solutions held by the self-node.

Thus, the information processing system 2 may gradually improve the solutions held in each node, and increase the possibility of reaching an appropriate solution.

For example, each of the plurality of nodes specifies a first solution by reflecting a value of a state variable belonging to a state variable group allocated to the self-node, which is included in a second solution newly specified as a search result in the self-node, in each of a plurality of solutions held by the self-node.

Thus, the information processing system 2 may easily reflect the search result early on many appropriate solutions held by each node, and may increase the possibility of early reaching a better solution.

Alternatively, each of the plurality of nodes may set the second solution newly specified as the search result in the self-node as the first solution.

Thus, the information processing system 2 may gradually improve the solutions held in each node, and increase the possibility of reaching an appropriate solution.

Each of the plurality of nodes updates at least a part of the plurality of solutions held by the self-node, based on the value of the energy function corresponding to the solution received from another node.

Thus, the information processing system 2 may improve the solution by the plurality of nodes in common while sharing the appropriate solution obtained by each node with other nodes, and may improve the solution finding performance for a relatively large-scale problem.

Each of the plurality of nodes generates an initial solution to be used for the next search based on the plurality of solutions held by the self-node.

Thus, the information processing system 2 may perform the search by each node while gradually narrowing the search space to the proximity of the appropriate solution obtained by each node, and may increase the possibility of reaching a better solution.

The control unit 51 may allocate a plurality of subproblems to a plurality of nodes. After a search for a solution by each of the plurality of nodes and transmission and reception of the solution between the nodes are repeatedly performed for a certain period of time, the control unit 51 may specify at least one solution among the plurality of solutions held by each of the plurality of nodes, and output the specified solution.

Thus, a final solution obtained by using the plurality of nodes may be appropriately acquired. As described above, the control unit 51 acquires at least one solution held by the plurality of nodes in their respective solution buffers, and outputs the acquired solution. For example, the control unit 51 may preferentially output a solution having small energy. The control unit 51 may convert the acquired solution into a solution form to the combinatorial optimization problem, display the content of the solution after the conversion on a display coupled to the control apparatus 50 or transmit the content to a computer such as a client computer coupled to the network 60.

Although the example in which the functions of the control unit 51 are provided in the control apparatus 50 is described, any one of the nodes 100, 200, 300, and 400 may have the functions of the control unit 51. For example, the CPU of any of the nodes 100, 200, 300, and 400 may implement the functions of the control unit 51 by executing a program stored in the RAM of the corresponding node.

The information processing system 1 may also include the control apparatus 50. Any of the nodes 10, 20, 30, and 40 may have the function of the control unit 51 in the control apparatus 50.

Each node may be realized by a computer. Any computer may cause a CPU of the computer to execute a program stored in a RAM of the computer, thereby causing each node to execute solution search in cooperation with another node as described in the first and second embodiments.

The information processing according to the first embodiment may be realized by causing the processing unit 12 to execute a program. The information processing of the second embodiment may be realized by causing the CPU 101 to execute a program. The program may be recorded in the computer-readable recording medium 61.

For example, the program is circulated by distributing the recording medium 61 in which the program is recorded. The program may be stored in another computer, or may be distributed from another computer via a network. For example, the computer may store (install), in a storage device such as the RAM 102 or the HDD 103, the programs recorded in the recording medium 61 or programs received from another computer, and may read the programs from the storage device to execute the programs.

**Claims**

1. An information processing system for a solution to a problem represented by an energy function including a plurality of state variables,
   comprising:

   a first node configured to search for the solution to a problem by changing a value of a state variable among one or more first state variables belong to first state variable group assigned corresponding to a first subproblem among a plurality of subgroups that is generated by dividing the problem, the first state variable group including at least of a part of the plurality of state variables, the first subproblem being assigned to the first node; and
   one or more second nodes; wherein
   the first nodes is further configured to:

hold a first weighting coefficient indicating a weight for a first pair of two state variables that is assigned to the first node,

hold a second weighting coefficient indicating a weight for a second pair of a first state variable that is assigned to the first node and a second state variable that is assigned to any of the one or more second nodes or a penalty value used for calculation of the second weighting coefficient,

multiplex the second weighting coefficient or the penalty value by a coefficient which is larger than 0 and smaller than 1,

calculate, for a value of each of the one or more first state variables, a change amount of a value of the energy function caused by changing the value of each of the one or more fist state variables, based on a third weighting coefficient that is a result of multiplying the second weighting coefficient by the coefficient, or a fourth weighting coefficient for the second pair calculated by using a result of multiplying the penalty value by the coefficient, and the first weighting coefficient, and

determine the state variable of which the value is to be changed, based on the change amount calculated for each of the one or more first state variables.

2. The information processing system according to claim 1, wherein the one or more second nodes includes a second node that is configured to search for the solution to the problem by changing a value of a state variable among one or more second state variables belong to second state variable group assigned corresponding to a second subproblem among a plurality of subgroups, the second state variable group including at least of a part of the plurality of state variables, the second subproblem being assigned to the second node.

3. The information processing system according to claim 1,
wherein the first node is further configured to:

calculate the value of the energy function corresponding to the solution specified by the first node by using the second weighting coefficient instead of the third weighting coefficient or the fourth weighting coefficient,
hold a plurality of first solutions in accordance with the calculated value of the energy function,
receive a second solution transmitted by at least one of the one or more second nodes, and
update at least some of the plurality of first solutions held by the first node, based on the received second solution.

4. The information processing system according to claim 3,
wherein the first node is further configured to:
transmit at least one of the plurality of first solutions to at least one of the one or more second nodes,

5. The information processing system according to claim 3,
wherein the first node is further configured to:
replaces any of the plurality of first solutions held by the first node with a third solution newly specified by the first node, based on the values of the energy functions corresponding to the third solution and each of the plurality of first solutions.

6. The information processing system according to claim 5,
Wherein the first node is further configured to:
specify the third solution by reflecting a value of a state variable belonging to the first state variable group, which is included in a fourth solution newly specified by the first node, in each of the plurality of first solutions held by the first node

7. The information processing system according to claim 5,
wherein the first node is further configured to set a fourth solution newly specified by the first node as the third solution.

8. The information processing system according to claim 3,
wherein the first node configured to update at least some of the plurality of first solutions held by the first node, based on the value of the energy function corresponding to the second solution received from at least one of the one or more second nodes.

9. The information processing system according to claim 3,
wherein the first node is further configured to generate an initial solution to be used for next search based on the plurality of first solutions held by the first nodes.

10. The information processing system according to claim 4, further comprising:
a control apparatus configured to:

allocate the plurality of subproblems to a plurality of nodes including the first node and the one or more second nodes,
specify at least one solution among the plurality of first solutions held by the first nodes when the first node performs a repeatedly process for a certain period of time, the process including searching for the solution, transmitting at least one of the plurality of first solutions, and receiving the second solution are repeatedly performed for a certain period of time, and
output the specified solution.

11. The information processing system according to claim 1,
wherein the first node is further configured to use the second weighting coefficient instead of the third weighting coefficient or the fourth weighting coefficient when obtaining the value of the energy function corresponding to the solution specified by the first node.

12. An information processing method performed by a first node in which an information processing system for a solution to a problem represented by an energy function including a plurality of state variables, the information processing system includes one or more second nodes, the information processing method comprising:

holding a first weighting coefficient indicating a weight for a first pair of two state variables that is assigned to the first node;
holding a second weighting coefficient indicating a weight for a second pair of a first state variable that is assigned to the first node and a second state variable that is assigned to any of the one or more second nodes or a penalty value used for calculation of the second weighting coefficient;
multiplexing the second weighting coefficient or the penalty value by a coefficient which is larger than 0 and smaller than 1;
calculating, for a value of each of one or more first state variables belong to the first state variable group assigned corresponding to a subproblem among a plurality of subgroups that is generated by dividing the problem, a change amount of a value of the energy function caused by changing the value of each of the one or more state variables, based on a third weighting coefficient that is a result of multiplying the second weighting coefficient by the coefficient, or a fourth weighting coefficient for the second pair calculated by using a result of multiplying the penalty value by the coefficient, and the first weighting coefficient, the first state variable group including at least of a part of the plurality of state variables, the subproblem being assigned to the first node;
determining a state variable of which the value is to be changed, based on the change amount calculated for each of the one or more first state variables; and
searching for the solution to the problem by changing a value of the state variable among the one or more first state variables.

13. An information processing program in which a computer included in an information processing system that includes one or more second nodes for a solution to a problem represented by an energy function including a plurality of state variables executes performs processing of:

holding a first weighting coefficient indicating a weight for a first pair of two state variables that is assigned to the first node;
holding a second weighting coefficient indicating a weight for a second pair of a first state variable that is assigned to the first node and a second state variable that is assigned to any of the one or more second nodes or a penalty value used for calculation of the second weighting coefficient;
multiplexing the second weighting coefficient or the penalty value by a coefficient which is larger than 0 and smaller than 1;
calculating, for a value of each of one or more first state variables belong to the first state variable group assigned corresponding to a subproblem among a plurality of subgroups that is generated by dividing the problem, a change amount of a value of the energy function caused by changing the value of each of the one or more state variables, based on a third weighting coefficient that is a result of multiplying the second weighting coefficient by the coefficient, or a fourth weighting coefficient for the second pair calculated by using a result of multiplying the penalty value by the coefficient, and the first weighting coefficient, the first state variable group including at least of a part of the plurality of state variables, the subproblem being assigned to the first node;
determining a state variable of which the value is to be changed, based on the change amount calculated for each of the one or more first state variables; and

searching for the solution to the problem by changing a value of the state variable among the one or more first state variables.

# FIG. 1

| STATE VARIABLE ALLOCATION PORTION | X0 | X1 | X2 | X3 |
|---|---|---|---|---|
| | W_00 | W_01 | W_02 | W_03 |
| | W_10 | W_11 | W_12 | W_13 |
| WEIGHTING COEFFICIENT | W_20 | W_21 | W_22 | W_23 |
| | W_30 | W_31 | W_32 | W_33 |

1

NODE 10

PROCESSING UNIT 12

SEARCH UNIT 13

STORAGE UNIT 11

| W_00 | |
| W_10 | ×a |
| W_20 | ×a |
| W_30 | ×a |

NODE 20

PROCESSING UNIT 22

SEARCH UNIT 23

STORAGE UNIT 21

| W_01 | ×a |
| W_11 | |
| W_21 | ×a |
| W_31 | ×a |

NODE 30

NODE 40

# FIG. 2

START

HOLD WEIGHTING COEFFICIENT OF OWN REGION — S1

RECEIVE SOLUTION FROM OTHER NODE AND TRANSMIT
SOLUTION TO OTHER NODE — S2

GENERATE INITIAL SOLUTION — S3

SCALE WEIGHTING COEFFICIENT RELATED TO STATE VARIABLE IN
OTHER REGION WITH COEFFICIENT $\alpha$ $(0 < \alpha < 1)$ — S4

CALCULATE BIAS TO FIX VARIABLE PORTION ALLOCATED
TO OTHER REGION — S5

EXECUTE SOLUTION SEARCH BY SEARCH UNIT — S6

CALCULATE ENERGY BY USING WEIGHTING COEFFICIENT
WITHOUT SCALING WITH COEFFICIENT $\alpha$ — S7

UPDATE OF SOLUTION HELD IN SELF-NODE AND SELECT
SOLUTION — S8

IS END CONDITION SATISFIED? — S9

NO

YES

END

# FIG. 3

# FIG. 4

# FIG. 5

EP 4 075 345 A1

# FIG. 6

# FIG. 7

80

| NODE NAME | NODE 100 | NODE 200 | NODE 300 | NODE 400 |
|---|---|---|---|---|
| STATE ALLOCATION PORTION | X0 | X1 | X2 | X3 |
| WEIGHTING COEFFICIENT | W_00 | W_01 | W_02 | W_03 |
| | W_10 | W_11 | W_12 | W_13 |
| | W_20 | W_21 | W_22 | W_23 |
| | W_30 | W_31 | W_32 | W_33 |

# FIG. 8

SOLUTION BUFFER                                                                    130

| # | SOLUTION | | | | ENERGY VALUE |
|---|---|---|---|---|---|
| 0 | X0_0 | X1_0 | X2_0 | X3_0 | E0 |
| 1 | X0_1 | X1_1 | X2_1 | X3_1 | E1 |
| 2 | X0_2 | X1_2 | X2_2 | X3_2 | E2 |
| 3 | X0_3 | X1_3 | X2_3 | X3_3 | E3 |

# FIG. 9

80a

| NODE NAME | NODE 100 | NODE 200 | NODE 300 | NODE 400 |
|---|---|---|---|---|
| STATE ALLOCATION PORTION | X0 | X1 | X2 | X3 |
| WEIGHTING COEFFICIENT | W_00 | W_01 | W_02 | W_03 |
| | W_10 | W_11 | W_12 | W_13 |
| | W_20 | W_21 | W_22 | W_23 |
| | W_30 | W_31 | W_32 | W_33 |

# FIG. 10

80b

OWN REGION

OTHER REGION

| | | |
|---|---|---|
| | | 1 |

OWN REGION

X

$w_{ij}$

OTHER REGION

# FIG. 11

91

ENERGY

$w_{ij}$

0    1    VALUE OF x

92

ENERGY

$aw_{ij}$

0    1    VALUE OF x

# FIG. 12

```
     ┌─────────────────────┐
     │    START OVERALL    │
     │    CONTROL ON       │
     │     SEARCH          │
     └─────────────────────┘
                │
                ▼               S10
     ┌─────────────────────┐
     │ HOLD WEIGHTING      │
     │ COEFFICIENT         │
     │ OF OWN REGION       │
     └─────────────────────┘
                │
                ▼               S11
     ┌─────────────────────┐
     │ SCALE WEIGHTING     │
     │ COEFFICIENT         │
     │ RELATED TO BIT IN   │
     │ OTHER REGION WITH α │
     └─────────────────────┘
                │
                ▼               S12
     ┌─────────────────────┐
     │ CALCULATE BIAS WITH │
     │ SCALED WEIGHTING    │
     │ COEFFICIENT AND     │
     │ SET BIAS IN SEARCH  │
     │ UNIT                │
     └─────────────────────┘
                │
                ▼               S13
     ┌─────────────────────┐
     │ EXECUTE SEARCH BY   │
     │ SEARCH UNIT         │
     └─────────────────────┘
                │
                ▼               S14
     ┌─────────────────────┐
     │ POST-SEARCH         │
     │ SOLUTION UPDATE     │
     └─────────────────────┘
                │
                ▼               S15
     ┌─────────────────────┐
     │ SOLUTION            │
     │ TRANSMISSION TO     │
     │ OTHER NODE          │
     └─────────────────────┘
                │
                ▼               S16
     ┌─────────────────────┐
     │ SOLUTION RECEPTION  │
     │ FROM OTHER NODE     │
     └─────────────────────┘
                │
                ▼               S17
     ◁ IS END CONDITION SATISFIED? ▷ ─── NO ──┐
                │                              │
               YES           S19              ▼          S18
     ┌─────────────────────┐      ┌─────────────────────┐
     │ OUTPUT SOLUTION IN  │      │ FIX VARIABLES FOR   │
     │ SOLUTION BUFFER     │      │ SEARCH              │
     └─────────────────────┘      └─────────────────────┘
                │
                ▼
     ┌─────────────┐
     │     END     │
     └─────────────┘
```

# FIG. 13

START POST-SEARCH
SOLUTION UPDATE

S20

ACQUIRE ALLOCATION REGION PORTION Sp OF
SOLUTION FROM SEARCH UNIT

S21

SOLUTION CANDIDATE GENERATION LOOP
i=0; i < K; i++

S22

ACQUIRE I-TH SOLUTION S(i) AND ENERGY E(i)
FROM SOLUTION BUFFER

S23

GENERATE SOLUTION CANDIDATE S'(i) OBTAINED
BY REPLACING CORRESPONDING BIT WITH
ALLOCATION REGION PORTION Sp FOR SOLUTION
S(i)

S24

CALCULATE ENERGY E'(i) OF SOLUTION
CANDIDATE S'(i) BY USING WEIGHTING
COEFFICIENT THAT IS NOT SCALED WITH
COEFFICIENT $\alpha$

S25

SOLUTION CANDIDATE GENERATION LOOP

S26

COMPARE TOTAL OF 2K ENERGY E(i) AND E'(i)
CORRESPONDING TO ORIGINAL SOLUTION S(i) IN
SOLUTION BUFFER AND GENERATED SOLUTION
CANDIDATE S'(i), AND SELECT K SOLUTIONS IN
ASCENDING ORDER OF ENERGY

S27

REPLACE SOLUTIONS IN SOLUTION BUFFER WITH
K SELECTED SOLUTIONS

END

# FIG. 14

```
        ╭─────────────────╮
        │  START SOLUTION  │
        │ TRANSMISSION TO  │
        │   OTHER NODE     │
        ╰─────────────────╯
                 │
                 ▼                              S30
  ┌──────────────────────────────────────────────┐
  │ ACQUIRE TOP k SOLUTIONS FROM SOLUTION BUFFER   │
  └──────────────────────────────────────────────┘
                 │
                 ▼                              S31
  ┌──────────────────────────────────────────────┐
  │ TRANSMIT k SELECTED SOLUTIONS AND ENERGY TO    │
  │ OTHER NODE VIA COMMUNICATION UNIT              │
  └──────────────────────────────────────────────┘
                 │
                 ▼
            ╭─────────╮
            │   END   │
            ╰─────────╯
```

# FIG. 15

START SOLUTION RECEPTION
FROM OTHER NODE

S40

RECEIVE SOLUTION Sr AND ENERGY Er FROM OTHER
NODE

S41

ACQUIRE ENERGY Ew OF Worst SOLUTION Sw IN
SOLUTION BUFFER

S42

$Er \leq Ew$ — NO

YES

S43

REPLACE Worst SOLUTION Sw IN SOLUTION BUFFER
WITH SOLUTION Sr

END

# FIG. 16

```
        ╭─────────────────────────╮
        │  START FIXING VARIABLES  │
        │        FOR SEARCH        │
        ╰─────────────────────────╯
                    │
                    ▼               ⟋ S50
  ┌─────────────────────────────────────────┐
  │  FREELY SELECT ONE SOLUTION Ss AMONG TOP k │
  │       SOLUTIONS IN SOLUTION BUFFER        │
  └─────────────────────────────────────────┘
                    │
                    ▼               ⟋ S51
  ┌─────────────────────────────────────────┐
  │    CALCULATE BIAS BY WEIGHTING COEFFICIENT │
  │   SCALED WITH α SUCH THAT VARIABLE PORTION │
  │ ALLOCATED TO OTHER NODE IS FIXED TO VALUE OF │
  │           SELECTED SOLUTION Ss            │
  └─────────────────────────────────────────┘
                    │
                    ▼               ⟋ S52
  ┌─────────────────────────────────────────┐
  │ INPUT SELECTED SOLUTION Ss AND BIAS TO SEARCH │
  │    UNIT, AND START EXECUTION OF SEARCH    │
  └─────────────────────────────────────────┘
                    │
                    ▼
            ╭───────────────╮
            │      END      │
            ╰───────────────╯
```

# FIG. 17

START POST-SEARCH
SOLUTION UPDATE

S60

HOLD SOLUTION Sf USED FOR FIXING VARIABLES
OTHER THAN CORRESPONDING SELF-NODE
VARIABLES FOR SEARCH, AND ENERGY Ef

S61

ACQUIRE ALLOCATION REGION PORTION Sp OF
SOLUTION FROM SEARCH UNIT

S62

GENERATE SOLUTION Sf' BY REPLACING
CORRESPONDING BIT OF SOLUTION Sf USED FOR
FIXING VARIABLES, WITH ALLOCATION REGION
PORTION Sp

S63

CALCULATE ENERGY Ef' OF SOLUTION Sf' BY USING
WEIGHTING COEFFICIENT THAT IS NOT SCALED
WITH COEFFICIENT $\alpha$

S64

COMPARE ENERGY Ef AND Ef', AND SELECT SOLUTION
WITH SMALLER ENERGY

S65

REPLACE Worst SOLUTION IN SOLUTION BUFFER
WITH SELECTED SOLUTION

END

# FIG. 18

# FIG. 19

**EP 4 075 345 A1**

<table>
<tr><td colspan="4" align="center">Europäisches Patentamt<br>European Patent Office<br>Office européen des brevets</td><td colspan="2" align="center">**EUROPEAN SEARCH REPORT**</td><td>**Application Number**<br>EP 21 21 7421</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YASUDO RYOTA YASUDO@CS HIROSHIMA-U AC JP ET AL: "Adaptive Bulk Search: Solving Quadratic Unconstrained Binary Optimization Problems on Multiple GPUs", PROCEEDINGS OF THE ELEVENTH ACM INTERNATIONAL CONFERENCE ON FUTURE ENERGY SYSTEMS, ACMPUB27, NEW YORK, NY, USA, 17 August 2020 (2020-08-17), pages 1-11, XP058583122, DOI: 10.1145/3404397.3404423 ISBN: 978-1-4503-8052-2 * figure 5 * * sections 1-3 * | 1-13 | INV.<br>G06N5/00<br>G06N7/00 |
| X | XIAOYUAN LIU ET AL: "On Modeling Local Search with Special-Purpose Combinatorial Optimization Hardware", ARXIV.ORG, CORNELL UNIVERSITY LIBRARY, 201 OLIN LIBRARY CORNELL UNIVERSITY ITHACA, NY 14853, 22 November 2019 (2019-11-22), XP081537540, * abstract * * sections 2-4 * | 1,12,13 | |

TECHNICAL FIELDS
SEARCHED (IPC)

G06N

The present search report has been drawn up for all claims

| Place of search | Date of completion of the search | Examiner |
|---|---|---|
| The Hague | 8 June 2022 | Theissing, Simon |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020160755 A

- JP 2019179364 A